(19) Europäisches Patentamt / European Patent Office / Office européen des brevets

(11) EP 3 471 311 B1

(12) # EUROPEAN PATENT SPECIFICATION

(45) Date of publication and mention of the grant of the patent:
**26.10.2022 Bulletin 2022/43**

(21) Application number: **17815742.6**

(22) Date of filing: **23.06.2017**

(51) International Patent Classification (IPC):
***H04L 5/00*** (2006.01) ***H04L 1/00*** (2006.01)

(52) Cooperative Patent Classification (CPC):
**H04L 1/0026; H04L 5/0023; H04L 5/0035; H04L 5/0048; H04L 5/0057; H04L 5/0064; H04L 5/0082**

(86) International application number:
**PCT/KR2017/006622**

(87) International publication number:
**WO 2017/222329 (28.12.2017 Gazette 2017/52)**

(54) **METHOD FOR REPORTING CHANNEL STATE IN WIRELESS COMMUNICATION SYSTEM AND DEVICE THEREFOR**

VERFAHREN ZUR MELDUNG DES KANALSTATUS IN EINEM DRAHTLOSKOMMUNIKATIONSSYSTEM UND VORRICHTUNG DAFÜR

PROCÉDÉ DESTINÉ À RAPPORTER UN ÉTAT DE CANAL DANS UN SYSTÈME DE COMMUNICATION SANS FIL ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2016 US 201662354113 P**
**22.12.2016 US 201662437687 P**

(43) Date of publication of application:
**17.04.2019 Bulletin 2019/16**

(73) Proprietor: **LG Electronics Inc.**
**Seoul 07336 (KR)**

(72) Inventors:
- **YUM, Kunil**
  **Seoul 06772 (KR)**
- **PARK, Jonghyun**
  **Seoul 06772 (KR)**
- **KANG, Jiwon**
  **Seoul 06772 (KR)**
- **YI, Yunjung**
  **Seoul 06772 (KR)**

(74) Representative: **Maikowski & Ninnemann Patentanwälte Partnerschaft mbB**
**Postfach 15 09 20**
**10671 Berlin (DE)**

(56) References cited:
**WO-A1-2015/012653 WO-A1-2015/060681**
**WO-A1-2016/017982 KR-A- 20150 035 555**

- **NOKIA ET AL: "On the CSI timing relationships", 3GPP DRAFT; R1-1610267, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 30 September 2016 (2016-09-30), XP051158906, Retrieved from the Internet: URL:http://www.3gpp.org/ftp/tsg_ran/WG1_RL1/TSGR1_86b/Docs/ [retrieved on 2016-09-30]**
- **SAMSUNG: "On Aperiodic CSI-RS Design", R1-164773, 3GPP TSG RAN WG1 #85, 13 May 2016 (2016-05-13), XP051090138,**
- **XINWEI: "Discussion on CSI Reporting for Hybrid CSI-RS", R1-164895, 3GPP TSG RAN WG1 Meeting #85, 13 May 2016 (2016-05-13), XP051090230,**
- **LG ELECTRONICS: "Discussion on CSI Reporting Enhancements for Hybrid CSI-RS", R1-164526, 3GPP TSG RAN WG1 Meeting #85, 14 May 2016 (2016-05-14), XP051096406,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 471 311 B1

## Description

### Technical Field

The present invention relates to a wireless communication system, and more particularly, to a method and apparatus for reporting a channel state.

### Background Art

With the introduction of full dimension-multiple input multiple output (FD-MIMO), K (>1) channel state information-reference signal (CSI-RS) resources to which different two-dimensional (2D) (vertical and/or horizontal) precodings are applied may be transmitted in one CSI process, so that a user equipment (UE) may determine a 2D domain to be used or use the 2D domain. The introduction of FD-MIMO is accompanied by the introduction of an aperiodic CSI-RS. Therefore, there is a need for defining a UE operation for CSI reporting based on an aperiodic CSI-RS.

Nokia et al.: "On the CSI timing relationships", 3GPP Draft, R1-1610267, vol. RAN WG1, no. Lisbon, 20161010 - 20161014, 30 September 2016, relates to timing for CSI-RS transmission and reporting schemes.

### Disclosure

### Technical Problem

The present invention is intended to propose a method of reporting a channel state. More particularly, the present invention is intended to propose a method of reporting a channel state based on an aperiodic channel state information-reference signal (CSI-RS).

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The invention is defined by the independent claims. Embodiments of the invention are set forth in the dependent claims. According to an embodiment of the present invention, a method of performing a channel state report in a wireless communication system according to claim 1 is provided.

Further, a user equipment according to claim 7 and a method of receiving a channel state report in a wireless communication system according to claim 13 are provided.

The foregoing solutions are merely a part of the embodiments of the present disclosure, and those skilled in the art could derive and understand various embodiments reflecting the technical features of the present disclosure from the following detailed description of the present disclosure.

### Advantageous Effects

According to the embodiments of the present invention, a channel state measurement can efficiently be processed.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### Brief Description of the Drawings

The accompanying drawings, which are included to provide a further understanding of the disclosure and are incorporated in and constitute a part of this application, illustrate embodiments of the disclosure and together with the description serve to explain the principle of the disclosure. In the drawings:

FIG. 1 illustrates an exemplary radio frame structure in a wireless communication system;

FIG. 2 illustrates an exemplary downlink/uplink (DL/UL) slot structure in the wireless communication system;

FIG. 3 illustrates an exemplary DL subframe structure in a 3rd generation partnership project (3GPP) long term evolution/long term evolution-advanced (LTE/LTE-A) system;

FIG. 4 illustrates an exemplary UL subframe structure in the 3GPP LTE/LTE-A system;

FIG. 5 illustrates aperiodic channel state information-reference signal (CSI-RS) transmissions;
FIG. 6 illustrates a periodic CSI-RS configuration and an aperiodic CSI-RS configuration;
FIG. 7 illustrates an operation based on aperiodic CS-RS feedback enable signaling;
FIG. 8 illustrates aperiodic CSI-RS resources and aperiodic channel state information-interference measurement (CSI-IM) resources;
FIG. 9 illustrates signaling of semi-persistent CSI reporting activation, and an operation based on the signaling;
FIG. 10 illustrates signaling of semi-persistent CSI reporting activation, and an operation based on the signaling;
FIG. 11 illustrates signaling of semi-persistent CSI reporting activation, and an operation based on the signaling;
FIG. 12 is a flowchart illustrating an operation of a user equipment (UE) according to an embodiment of the present invention; and
FIG. 13 is a block diagram of apparatuses for implementing embodiment(s) of the present invention.

**Best Mode for Carrying Out the Invention**

Reference will now be made in detail to the preferred embodiments of the present invention, examples of which are illustrated in the accompanying drawings. The accompanying drawings illustrate exemplary embodiments of the present invention and provide a more detailed description of the present invention. However, the scope of the present invention should not be limited thereto.

In some cases, to prevent the concept of the present invention from being ambiguous, structures and apparatuses of the known art will be omitted, or will be shown in the form of a block diagram based on main functions of each structure and apparatus. Also, wherever possible, the same reference numbers will be used throughout the drawings and the specification to refer to the same or like parts.

In the present invention, a user equipment (UE) is fixed or mobile. The UE is a device that transmits and receives user data and/or control information by communicating with a base station (BS). The term 'UE' may be replaced with 'terminal equipment', 'Mobile Station (MS)', 'Mobile Terminal (MT)', 'User Terminal (UT)', 'Subscriber Station (SS)', 'wireless device', 'Personal Digital Assistant (PDA)', 'wireless modem', 'handheld device', etc. A BS is typically a fixed station that communicates with a UE and/or another BS. The BS exchanges data and control information with a UE and another BS. The term 'BS' may be replaced with 'Advanced Base Station (ABS)', 'Node B', 'evolved-Node B (eNB)', 'Base Transceiver System (BTS)', 'Access Point (AP)', 'Processing Server (PS)', etc. In the following description, BS is commonly called eNB.

In the present invention, a node refers to a fixed point capable of transmitting/receiving a radio signal to/from a UE by communication with the UE. Various eNBs can be used as nodes. For example, a node can be a BS, NB, eNB, pico-cell eNB (PeNB), home eNB (HeNB), relay, repeater, etc. Furthermore, a node may not be an eNB. For example, a node can be a radio remote head (RRH) or a radio remote unit (RRU). The RRH and RRU have power levels lower than that of the eNB. Since the RRH or RRU (referred to as RRH/RRU hereinafter) is connected to an eNB through a dedicated line such as an optical cable in general, cooperative communication according to RRH/RRU and eNB can be smoothly performed compared to cooperative communication according to eNBs connected through a wireless link. At least one antenna is installed per node. An antenna may refer to an antenna port, a virtual antenna or an antenna group. A node may also be called a point. Unlink a conventional centralized antenna system (CAS) (i.e., single node system) in which antennas are concentrated in an eNB and controlled an eNB controller, plural nodes are spaced apart at a predetermined distance or longer in a multi-node system. The plural nodes can be managed by one or more eNBs or eNB controllers that control operations of the nodes or schedule data to be transmitted/received through the nodes. Each node may be connected to an eNB or eNB controller managing the corresponding node via a cable or a dedicated line. In the multi-node system, the same cell identity (ID) or different cell IDs may be used for signal transmission/reception through plural nodes. When plural nodes have the same cell ID, each of the plural nodes operates as an antenna group of a cell. If nodes have different cell IDs in the multi-node system, the multi-node system can be regarded as a multi-cell (e.g., macro-cell/femto-cell/pico-cell) system. When multiple cells respectively configured by plural nodes are overlaid according to coverage, a network configured by multiple cells is called a multi-tier network. The cell ID of the RRH/RRU may be identical to or different from the cell ID of an eNB. When the RRH/RRU and eNB use different cell IDs, both the RRH/RRU and eNB operate as independent eNBs.

In a multi-node system according to the present invention, which will be described below, one or more eNBs or eNB controllers connected to multiple nodes may control the nodes such that signals are simultaneously transmitted to or received from a UE through some or all nodes. While there is a difference between multi-node systems according to the nature of each node and implementation form of each node, multi-node systems are discriminated from single node systems (e.g., a centralized antenna system (CAS), conventional MIMO systems, conventional relay systems, conventional repeater systems, etc.) since a plurality of nodes provides communication services to a UE in a predetermined time-frequency resource. Accordingly, embodiments of the present invention with respect to a method of performing coordinated data transmission using some or all nodes may be applied to various types of multi-node systems. For example, a node refers to an antenna group spaced apart from another node by a predetermined distance or more, in general. However, embodiments of the present invention, which will be described below, may even be applied to a case in which a node refers to an arbitrary antenna group irrespective of node interval. In the case of an eNB including an X-pole (cross-polarized) antenna, for example, the embodiments of the preset invention are applicable on the assumption that the eNB controls a node composed of an H-pole antenna and a node composed of a V-pole antenna.

A communication scheme through which signals are transmitted/received via plural transmit (Tx)/receive (Rx) nodes, signals are transmitted/received via at least one node selected from plural Tx/Rx nodes, or a node transmitting a downlink signal is discriminated from a node transmitting an uplink signal is called multi-eNB MIMO or CoMP (Coordinated Multi-Point Tx/Rx). Coordinated transmission schemes from among CoMP communication schemes can be categorized into JP (Joint Processing) and scheduling coordination. The former may be divided into JT (Joint Transmission)/JR (Joint Reception) and DPS (Dynamic Point Selection) and the latter may be divided into CS (Coordinated Scheduling) and CB (Coordinated Beamforming). DPS may be called DCS (Dynamic Cell Selection). When JP is performed, more various communication environments can be generated, compared to other CoMP schemes. JT refers to a communication scheme by which plural nodes transmit the same stream to a UE and JR refers to a communication scheme by which plural nodes receive the same stream from the UE. The UE/eNB combine signals received from the plural nodes to restore the stream. In the case of JT/JR, signal transmission reliability can be improved according to transmit diversity since the same stream is transmitted from/to plural nodes. DPS refers to a communication scheme by which a signal is transmitted/received through a node selected from plural nodes according to a specific rule. In the case of DPS, signal transmission reliability can be improved because a node having a good channel state between the node and a UE is selected as a communication node.

In the present invention, a cell refers to a specific geographical area in which one or more nodes provide communication services. Accordingly, communication with a specific cell may mean communication with an eNB or a node providing communication services to the specific cell. A downlink/uplink signal of a specific cell refers to a downlink/uplink signal from/to an eNB or a node providing communication services to the specific cell. A cell providing uplink/downlink communication services to a UE is called a serving cell. Furthermore, channel status/quality of a specific cell refers to channel status/quality of a channel or a communication link generated between an eNB or a node providing communication services to the specific cell and a UE. In 3GPP LTE-A systems, a UE can measure downlink channel state from a specific node using one or more CSI-RSs (Channel State Information Reference Signals) transmitted through antenna port(s) of the specific node on a CSI-RS resource allocated to the specific node. In general, neighboring nodes transmit CSI-RS resources on orthogonal CSI-RS resources. When CSI-RS resources are orthogonal, this means that the CSI-RS resources have different subframe configurations and/or CSI-RS sequences which specify subframes to which CSI-RSs are allocated according to CSI-RS resource configurations, subframe offsets and transmission periods, etc. which specify symbols and subcarriers carrying the CSI RSs.

In the present invention, PDCCH (Physical Downlink Control Channel)/PCFICH (Physical Control Format Indicator Channel)/PHICH (Physical Hybrid automatic repeat request Indicator Channel)/PDSCH (Physical Downlink Shared Channel) refer to a set of time-frequency resources or resource elements respectively carrying DCI (Downlink Control Information)/CFI (Control Format Indicator)/downlink ACK/NACK (Acknowledgement/Negative ACK)/downlink data. In addition, PUCCH (Physical Uplink Control Channel)/PUSCH (Physical Uplink Shared Channel)/PRACH (Physical Random Access Channel) refer to sets of time-frequency resources or resource elements respectively carrying UCI (Uplink Control Information)/uplink data/random access signals. In the present invention, a time-frequency resource or a resource element (RE), which is allocated to or belongs to PDCCH/PCFICH/PHICH/PDSCH/PUCCH/PUSCH/PRACH, is referred to as a PDCCH/PCFICH/PHICH/PDSCH/PUCCH/PUSCH/PRACH RE or PDCCH/PCFICH/PHICH/PDSCH/PUCCH/PUSCH/PRACH resource. In the following description, transmission of PUCCH/PUSCH/PRACH by a UE is equivalent to transmission of uplink control information/uplink data/random access signal through or on PUCCH/PUSCH/PRACH. Furthermore, transmission of PDCCH/PCFICH/PHICH/PDSCH by an eNB is equivalent to transmission of downlink data/control information through or on PDCCH/PCFICH/PHICH/PDSCH.

FIG. 1 illustrates an exemplary radio frame structure used in a wireless communication system. FIG. 1(a) illustrates a frame structure for frequency division duplex (FDD) used in 3GPP LTE/LTE-A and FIG. 1(b) illustrates a frame structure for time division duplex (TDD) used in 3GPP LTE/LTE-A.

Referring to FIG. 1, a radio frame used in 3GPP LTE/LTE-A has a length of 10ms (307200Ts) and includes 10 subframes in equal size. The 10 subframes in the radio frame may be numbered. Here, Ts denotes sampling time and is represented as Ts=1/(2048*15kHz). Each subframe has a length of 1ms and includes two slots. 20 slots in the radio frame can be sequentially numbered from 0 to 19. Each slot has a length of 0.5ms. A time for transmitting a subframe is defined as a transmission time interval (TTI). Time resources can be discriminated by a radio frame number (or radio frame index), subframe number (or subframe index) and a slot number (or slot index).

The radio frame can be configured differently according to duplex mode. Downlink transmission is discriminated from uplink transmission by frequency in FDD mode, and thus the radio frame includes only one of a downlink subframe and an uplink subframe in a specific frequency band. In TDD mode, downlink transmission is discriminated from uplink transmission by time, and thus the radio frame includes both a downlink subframe and an uplink subframe in a specific frequency band.

Table 1 shows DL-UL configurations of subframes in a radio frame in the TDD mode.

TABLE 1

| DL-UL configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 5ms | D | S | U | U | U | D | S | U | U | D |

In Table 1, D denotes a downlink subframe, U denotes an uplink subframe and S denotes a special subframe. The special subframe includes three fields of DwPTS (Downlink Pilot TimeSlot), GP (Guard Period), and UpPTS (Uplink Pilot TimeSlot). DwPTS is a period reserved for downlink transmission and UpPTS is a period reserved for uplink transmission. Table 2 shows special subframe configuration.

TABLE 2

| Special subframe configurati on | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | $4384 \cdot T_s$ | $5120 \cdot T_s$ |
| 5 | $6592 \cdot T_s$ | $4384 \cdot T_s$ | $5120 \cdot T_s$ | $20480 \cdot T_s$ | | |
| 6 | $19760 \cdot T_s$ | | | $23040 \cdot T_s$ | | |
| 7 | $21952 \cdot T_s$ | | | $12800 \cdot T_s$ | | |
| 8 | $24144 \cdot T_s$ | | | - | - | - |
| 9 | $13168 \cdot T_s$ | | | - | - | - |

FIG. 2 illustrates an exemplary downlink/uplink slot structure in a wireless communication system. Particularly, FIG. 2 illustrates a resource grid structure in 3GPP LTE/LTE-A. A resource grid is present per antenna port.

Referring to FIG. 2, a slot includes a plurality of OFDM (Orthogonal Frequency Division Multiplexing) symbols in the time domain and a plurality of resource blocks (RBs) in the frequency domain. An OFDM symbol may refer to a symbol period. A signal transmitted in each slot may be represented by a resource grid composed of $N_{RB}^{DL/UL} * N_{sc}^{RB}$ subcarriers and $N_{symb}^{DL/UL}$ OFDM symbols. Here, $N_{RB}^{DL}$ denotes the number of RBs in a downlink slot and $N_{RB}^{UL}$ denotes the number of RBs in an uplink slot. $N_{RB}^{DL}$ and $N_{RB}^{UL}$ respectively depend on a DL transmission bandwidth and a UL transmission bandwidth. $N_{symb}^{DL}$ denotes the number of OFDM symbols in the downlink slot and $N_{symb}^{UL}$ denotes the number of OFDM symbols in the uplink slot. In addition, $N_{sc}^{RB}$ denotes the number of subcarriers constructing one RB.

An OFDM symbol may be called an SC-FDM (Single Carrier Frequency Division Multiplexing) symbol according to multiple access scheme. The number of OFDM symbols included in a slot may depend on a channel bandwidth and the length of a cyclic prefix (CP). For example, a slot includes 7 OFDM symbols in the case of normal CP and 6 OFDM symbols in the case of extended CP. While FIG. 2 illustrates a subframe in which a slot includes 7 OFDM symbols for convenience, embodiments of the present invention can be equally applied to subframes having different numbers of OFDM symbols. Referring to FIG. 2, each OFDM symbol includes $N_{RB}^{DL/UL} * N_{sc}^{RB}$ subcarriers in the frequency domain. Subcarrier types can be classified into a data subcarrier for data transmission, a reference signal subcarrier for reference signal transmission, and null subcarriers for a guard band and a direct current (DC) component. The null subcarrier for a DC component is a subcarrier remaining unused and is mapped to a carrier frequency (f0) during OFDM signal generation or frequency up-conversion. The carrier frequency is also called a center frequency.

An RB is defined by $N_{symb}^{DL/UL}$ (e.g., 7) consecutive OFDM symbols in the time domain and $N_{sc}^{RB}$ (e.g., 12) consecutive subcarriers in the frequency domain. For reference, a resource composed by an OFDM symbol and a subcarrier is called a resource element (RE) or a tone. Accordingly, an RB is composed of $N_{symb}^{DL/UL} * N_{sc}^{RB}$ REs. Each RE in a resource grid can be uniquely defined by an index pair (k, 1) in a slot. Here, k is an index in the range of 0 to $N_{symb}^{DL/UL} * N_{sc}^{RB} -1$ in the frequency domain and 1 is an index in the range of 0 to $N_{symb}^{DL/UL} -1$.

Two RBs that occupy $N_{sc}^{RB}$ consecutive subcarriers in a subframe and respectively disposed in two slots of the subframe are called a physical resource block (PRB) pair. Two RBs constituting a PRB pair have the same PRB number (or PRB index). A virtual resource block (VRB) is a logical resource allocation unit for resource allocation. The VRB has the same size as that of the PRB. The VRB may be divided into a localized VRB and a distributed VRB depending on a mapping scheme of VRB into PRB. The localized VRBs are mapped into the PRBs, whereby VRB number (VRB index) corresponds to PRB number. That is, nPRB=nVRB is obtained. Numbers are given to the localized VRBs from 0 to $N_{VRB}^{DL} -1$, and $N_{VRB}^{DL} = N_{RB}^{DL}$ is obtained. Accordingly, according to the localized mapping scheme, the VRBs having the same VRB number are mapped into the PRBs having the same PRB number at the first slot and the second slot. On the other hand, the distributed VRBs are mapped into the PRBs through interleaving. Accordingly, the VRBs having the same VRB number may be mapped into the PRBs having different PRB numbers at the first slot and the second slot. Two PRBs, which are respectively located at two slots of the subframe and have the same VRB number, will be referred to as a pair of VRBs.

FIG. 3 illustrates a downlink (DL) subframe structure used in 3GPP LTE/LTE-A.

Referring to FIG. 3, a DL subframe is divided into a control region and a data region. A maximum of three (four) OFDM symbols located in a front portion of a first slot within a subframe correspond to the control region to which a control channel is allocated. A resource region available for PDCCH transmission in the DL subframe is referred to as a PDCCH region hereinafter. The remaining OFDM symbols correspond to the data region to which a physical downlink shared chancel (PDSCH) is allocated. A resource region available for PDSCH transmission in the DL subframe is referred to as a PDSCH region hereinafter. Examples of downlink control channels used in 3GPP LTE include a physical control format indicator channel (PCFICH), a physical downlink control channel (PDCCH), a physical hybrid ARQ indicator channel (PHICH), etc. The PCFICH is transmitted at a first OFDM symbol of a subframe and carries information regarding the number of OFDM symbols used for transmission of control channels within the subframe. The PHICH is a response of uplink transmission and carries an HARQ acknowledgment (ACK)/negative acknowledgment (NACK) signal.

Control information carried on the PDCCH is called downlink control information (DCI). The DCI contains resource allocation information and control information for a UE or a UE group. For example, the DCI includes a transport format and resource allocation information of a downlink shared channel (DL-SCH), a transport format and resource allocation information of an uplink shared channel (UL-SCH), paging information of a paging channel (PCH), system information on the DL-SCH, information about resource allocation of an upper layer control message such as a random access response transmitted on the PDSCH, a transmit control command set with respect to individual UEs in a UE group, a transmit power control command, information on activation of a voice over IP (VoIP), downlink assignment index (DAI), etc. The transport format and resource allocation information of the DL-SCH are also called DL scheduling information or a DL grant and the transport format and resource allocation information of the UL-SCH are also called UL scheduling information or a UL grant. The size and purpose of DCI carried on a PDCCH depend on DCI format and the size thereof may be varied according to coding rate. Various formats, for example, formats 0 and 4 for uplink and formats 1, 1A, 1B, 1C, ID, 2, 2A, 2B, 2C, 3 and 3A for downlink, have been defined in 3GPP LTE. Control information such as a hopping flag, information on RB allocation, modulation coding scheme (MCS), redundancy version (RV), new data indicator (NDI), information on transmit power control (TPC), cyclic shift demodulation reference signal (DMRS), UL index, channel quality information (CQI) request, DL assignment index, HARQ process number, transmitted precoding matrix indicator (TPMI), precoding matrix indicator (PMI), etc. is selected and combined based on DCI format and transmitted to a UE as DCI.

In general, a DCI format for a UE depends on transmission mode (TM) set for the UE. In other words, only a DCI format corresponding to a specific TM can be used for a UE configured in the specific TM.

A PDCCH is transmitted on an aggregation of one or several consecutive control channel elements (CCEs). The CCE is a logical allocation unit used to provide the PDCCH with a coding rate based on a state of a radio channel. The CCE corresponds to a plurality of resource element groups (REGs). For example, a CCE corresponds to 9 REGs and an REG corresponds to 4 REs. 3GPP LTE defines a CCE set in which a PDCCH can be located for each UE. A CCE set from which a UE can detect a PDCCH thereof is called a PDCCH search space, simply, search space. An individual resource through which the PDCCH can be transmitted within the search space is called a PDCCH candidate. A set of PDCCH candidates to be monitored by the UE is defined as the search space. In 3GPP LTE/LTE-A, search spaces for DCI formats may have different sizes and include a dedicated search space and a common search space. The dedicated search space is a UE-specific search space and is configured for each UE. The common search space is configured for a plurality of UEs. Aggregation levels defining the search space is as follows.

TABLE 3

| Search Space | | | Number of PDCCH candidates $M^{(L)}$ |
|---|---|---|---|
| Type | Aggregation Level L | Size [in CCEs] | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

A PDCCH candidate corresponds to 1, 2, 4 or 8 CCEs according to CCE aggregation level. An eNB transmits a PDCCH (DCI) on an arbitrary PDCCH candidate with in a search space and a UE monitors the search space to detect the PDCCH (DCI). Here, monitoring refers to attempting to decode each PDCCH in the corresponding search space according to all monitored DCI formats. The UE can detect the PDCCH thereof by monitoring plural PDCCHs. Since the UE does not know the position in which the PDCCH thereof is transmitted, the UE attempts to decode all PDCCHs of the corresponding DCI format for each subframe until a PDCCH having the ID thereof is detected. This process is called blind detection (or blind decoding (BD)).

The eNB can transmit data for a UE or a UE group through the data region. Data transmitted through the data region may be called user data. For transmission of the user data, a physical downlink shared channel (PDSCH) may be allocated to the data region. A paging channel (PCH) and downlink-shared channel (DL-SCH) are transmitted through the PDSCH. The UE can read data transmitted through the PDSCH by decoding control information transmitted through a PDCCH. Information representing a UE or a UE group to which data on the PDSCH is transmitted, how the UE or UE group receives and decodes the PDSCH data, etc. is included in the PDCCH and transmitted. For example, if a specific PDCCH is CRC (cyclic redundancy check)-masked having radio network temporary identify (RNTI) of "A" and information about data transmitted using a radio resource (e.g., frequency position) of "B" and transmission format information (e.g., transport block size, modulation scheme, coding information, etc.) of "C" is transmitted through a specific DL subframe, the UE monitors PDCCHs using RNTI information and a UE having the RNTI of "A" detects a PDCCH and receives a PDSCH indicated by "B" and "C" using information about the PDCCH.

A reference signal (RS) to be compared with a data signal is necessary for the UE to demodulate a signal received from the eNB. A reference signal refers to a predetermined signal having a specific waveform, which is transmitted from the eNB to the UE or from the UE to the eNB and known to both the eNB and UE. The reference signal is also called a pilot. Reference signals are categorized into a cell-specific RS shared by all UEs in a cell and a modulation RS (DM RS) dedicated for a specific UE. A DM RS transmitted by the eNB for demodulation of downlink data for a specific UE is called a UE-specific RS. Both or one of DM RS and CRS may be transmitted on downlink. When only the DM RS is transmitted without CRS, an RS for channel measurement needs to be additionally provided because the DM RS transmitted using the same precoder as used for data can be used for demodulation only. For example, in 3GPP LTE(-A), CSI-RS corresponding to an additional RS for measurement is transmitted to the UE such that the UE can measure channel state information. CSI-RS is transmitted in each transmission period corresponding to a plurality of subframes based on the fact that channel state variation with time is not large, unlike CRS transmitted per subframe.

FIG. 4 illustrates an exemplary uplink subframe structure used in 3GPP LTE/LTE-A.

Referring to FIG. 4, a UL subframe can be divided into a control region and a data region in the frequency domain. One or more PUCCHs (physical uplink control channels) can be allocated to the control region to carry uplink control information (UCI). One or more PUSCHs (Physical uplink shared channels) may be allocated to the data region of the UL subframe to carry user data.

In the UL subframe, subcarriers spaced apart from a DC subcarrier are used as the control region. In other words, subcarriers corresponding to both ends of a UL transmission bandwidth are assigned to UCI transmission. The DC subcarrier is a component remaining unused for signal transmission and is mapped to the carrier frequency f0 during frequency up-conversion. A PUCCH for a UE is allocated to an RB pair belonging to resources operating at a carrier frequency and RBs belonging to the RB pair occupy different subcarriers in two slots. Assignment of the PUCCH in this manner is represented as frequency hopping of an RB pair allocated to the PUCCH at a slot boundary. When frequency hopping is not applied, the RB pair occupies the same subcarrier.

The PUCCH can be used to transmit the following control information.

- Scheduling Request (SR): This is information used to request a UL-SCH resource and is transmitted using On-Off Keying (OOK) scheme.
- HARQ ACK/NACK: This is a response signal to a downlink data packet on a PDSCH and indicates whether the downlink data packet has been successfully received. A 1-bit ACK/NACK signal is transmitted as a response to a single downlink codeword and a 2-bit ACK/NACK signal is transmitted as a response to two downlink codewords. HARQ-ACK responses include positive ACK (ACK), negative ACK (NACK), discontinuous transmission (DTX) and NACK/DTX. Here, the term HARQ-ACK is used interchangeably with the term HARQ ACK/NACK and ACK/NACK.
- Channel State Indicator (CSI): This is feedback information about a downlink channel. Feedback information regarding MIMO includes a rank indicator (RI) and a precoding matrix indicator (PMI).

The quantity of control information (UCI) that a UE can transmit through a subframe depends on the number of SC-FDMA symbols available for control information transmission. The SC-FDMA symbols available for control information transmission correspond to SC-FDMA symbols other than SC-FDMA symbols of the subframe, which are used for reference signal transmission. In the case of a subframe in which a sounding reference signal (SRS) is configured, the last SC-FDMA symbol of the subframe is excluded from the SC-FDMA symbols available for control information transmission. A reference signal is used to detect coherence of the PUCCH. The PUCCH supports various formats according to information transmitted thereon.

Table 4 shows the mapping relationship between PUCCH formats and UCI in LTE/LTE-A.

TABLE 4

| **PUCCH format** | **Modulation scheme** | **Number of bits per subframe, $M_{bit}$** | **Usage** | **Etc.** |
|---|---|---|---|---|
| 1 | N/A | N/A(exist or absent) | SR (Scheduling Request) | |
| 1a | BPSK | 1 | ACK/NACK or SR + ACK/NACK | One codeword |
| 1b | QPSK | 2 | ACK/NACK or SR + ACK/NACK | Two codeword |
| 2 | QPSK | 20 | CQI/PMI/RI | Joint coding ACK/NACK (extended CP) |

(continued)

| PUCCH format | Modulation scheme | Number of bits per subframe, $M_{bit}$ | Usage | Etc. |
|---|---|---|---|---|
| 2a | QPSK+BPSK | 21 | CQI/PMI/RI + ACK/NACK | Normal CP only |
| 2b | QPSK+QPSK | 22 | CQI/PMI/RI + ACK/NACK | Normal CP only |
| 3 | QPSK | 48 | ACK/NACK or SR + ACK/NACK or CQI/PMI/RI + ACK/NACK | |

Referring to Table 4, PUCCH formats 1/1a/1b are used to transmit ACK/NACK information, PUCCH format 2/2a/2b are used to carry CSI such as CQI/PMI/RI and PUCCH format 3 is used to transmit ACK/NACK information.

**Reference signal (RS)**

When a packet is transmitted in a wireless communication system, signal distortion may occur during transmission since the packet is transmitted through a radio channel. To correctly receive a distorted signal at a receiver, the distorted signal needs to be corrected using channel information. To detect channel information, a signal known to both a transmitter and the receiver is transmitted and channel information is detected with a degree of distortion of the signal when the signal is received through a channel. This signal is called a pilot signal or a reference signal.

When data is transmitted/received using multiple antennas, the receiver can receive a correct signal only when the receiver is aware of a channel state between each transmit antenna and each receive antenna. Accordingly, a reference signal needs to be provided per transmit antenna, more specifically, per antenna port.

Reference signals can be classified into an uplink reference signal and a downlink reference signal. In LTE, the uplink reference signal includes:

i) a demodulation reference signal (DMRS) for channel estimation for coherent demodulation of information transmitted through a PUSCH and a PUCCH; and
ii) a sounding reference signal (SRS) used for an eNB to measure uplink channel quality at a frequency of a different network.

The downlink reference signal includes:

i) a cell-specific reference signal (CRS) shared by all UEs in a cell;
ii) a UE-specific reference signal for a specific UE only;
iii) a DMRS transmitted for coherent demodulation when a PDSCH is transmitted;
iv) a channel state information reference signal (CSI-RS) for delivering channel state information (CSI) when a downlink DMRS is transmitted;
v) a multimedia broadcast single frequency network (MBSFN) reference signal transmitted for coherent demodulation of a signal transmitted in MBSFN mode; and
vi) a positioning reference signal used to estimate geographic position information of a UE.

Reference signals can be classified into a reference signal for channel information acquisition and a reference signal for data demodulation. The former needs to be transmitted in a wide band as it is used for a UE to acquire channel information on downlink transmission and received by a UE even if the UE does not receive downlink data in a specific subframe. This reference signal is used even in a handover situation. The latter is transmitted along with a corresponding resource by an eNB when the eNB transmits a downlink signal and is used for a UE to demodulate data through channel measurement. This reference signal needs to be transmitted in a region in which data is transmitted.

**CSI Reporting**

In the 3GPP LTE(-A) system, a user equipment (UE) is defined to report CSI to a BS. Herein, the CSI collectively refers to information indicating the quality of a radio channel (also called a link) created between a UE and an antenna port. The CSI includes, for example, a rank indicator (RI), a precoding matrix indicator (PMI), and a channel quality indicator (CQI). Herein, the RI, which indicates rank information about a channel, refers to the number of streams that a UE receives through the same time-frequency resource. The RI value is determined depending on long-term fading of the channel, and is thus usually fed back to the BS by the UE with a longer period than for the PMI and CQI. The PMI, which has a value reflecting the channel space property, indicates a precoding index preferred by the UE based on a metric such as SINR. The CQI, which has a value indicating the intensity of a channel, typically refers to a receive SINR which may be obtained by the BS when the PMI is used.

The UE calculates, based on measurement of the radio channel, a preferred PMI and RI from which an optimum or highest transmission rate may be derived when used by the BS in the current channel state, and feeds back the calculated PMI and RI to the BS. Herein, the CQI refers to a modulation and coding scheme providing an acceptable packet error probability for the PMI/RI that is fed back.

On the other hand, in LTE-A systems, which are expected to include more precise MU-MIMO and explicit CoMP operations, current CSI feedback is defined in LTE and therefore does not adequately support such newly introduced operations. As the requirements for CSI feedback accuracy become increasingly difficult to achieve sufficient MU-MIMO or CoMP throughput gains, the PMI is able to achieve long term / wideband PMI (W1) and short (short) term / subband PMI (W2). In other word, the final PMI is expressed by a function of the $W_1$ and the $W_2$. For example, the final PMI W can be defined as follows: $W=W_1*W_2$ or $W=W_2*W_1$. Hence, in LTE-A, CSI can be configured by RI, $W_1$, $W_2$, and CQI.

In the 3GPP LTE(-A) system, an uplink channel used for CSI transmission is configured as shown in Table 5.

TABLE 5

| Scheduling scheme | Periodic CSI transmission | Aperiodic CSI transmission |
|---|---|---|
| Frequency non-selective | PUCCH | - |
| Frequency selective | PUCCH | PUSCH |

Referring to Table 5, CSI may be transmitted with a periodicity defined in a higher layer, using a physical uplink control channel (PUCCH). When needed by the scheduler, a physical uplink shared channel (PUSCH) may be aperiodically used to transmit the CSI. Transmission of the CSI over the PUSCH is possible only in the case of frequency selective scheduling and aperiodic CSI transmission. Hereinafter, CSI transmission schemes according to scheduling schemes and periodicity will be described.

1) Transmitting the CQI/PMI/RI over the PUSCH after receiving a CSI transmission request control signal (a CSI request)

A PUSCH scheduling control signal (UL grant) transmitted over a PDCCH may include a control signal for requesting transmission of CSI. The table below shows modes of the UE in which the CQI, PMI and RI are transmitted over the PUSCH.

TABLE 6

| | | PMI Feedback Type | | |
|---|---|---|---|---|
| | | No PMI | Single PMI | Multiple PMIs |
| PUSCH CQI Feedback Type | Wideband (Wideband CQI) | | | **Mode 1-2**<br>RI<br>1st wideband CQI(4bit)<br>2nd wideband CQI(4bit) if RI>1<br>N*Subband PMI(4bit) (N is the total # of subbands)<br>(if 8Tx Ant, N*subband W2 + |

| | | | | |
|---|---|---|---|---|
| | | | | wideband W1) |
| | UE selected<br><br>(Subband CQI) | **Mode 2-0**<br><br>RI (only for Open-loop SM)<br><br>1st wideband CQI(4bit) + Best-M CQI(2bit) (Best-M CQI: An average CQI for M SBs selected from among N SBs) Best-M index (L bit) | | **Mode 2-2**<br><br>RI<br><br>1st wideband CQI(4bit) + Best-M CQI(2bit)<br>2nd wideband CQI(4bit) + Best-M CQI(2bit) if RI>1<br>Best-M index (L bit)<br><br>Wideband PMI(4bit)+ Best-M PMI(4bit)<br>(if 8Tx Ant, wideband W2 + Best-M W2 + wideband W1) |
| | Higher Layer-configured<br><br>(Subband CQI) | **Mode 3-0**<br><br>RI (only for Open-loop SM)<br><br>1st wideband CQI(4bit)+N*subbandCQI(2bit) | **Mode 3-1**<br><br>RI<br><br>1st wideband CQI(4bit)+ N*subbandCQI(2bit)<br>2nd wideband CQI(4bit)+ N*subbandCQI(2bit) if RI>1<br><br>Wideband PMI(4bit)<br>(if 8Tx Ant, wideband W2 + | **Mode 3-2**<br><br>RI<br><br>1st wideband CQI(4bit)+ N*subbandCQI(2bit)<br>2nd wideband CQI(4bit)+ N*subbandCQI(2bit) if RI>1<br><br>N*Subband PMI(4bit)<br>(N is the total # of subbands) |

| | | | | |
|---|---|---|---|---|
| | | | wideband W1) | (if 8Tx Ant, N*subband W2 + wideband W1) |

The transmission modes in Table 6 are selected in a higher layer, and the CQI/PMI/RI are all transmitted in a PUSCH subframe. Hereinafter, uplink transmission methods for the UE according to the respective modes will be described.

Mode 1-2 represents a case where precoding matrices are selected on the assumption that data is transmitted only in subbands. The UE generates a CQI on the assumption of a precoding matrix selected for a system band or a whole band (set S) designated in a higher layer. In Mode 1-2, the UE may transmit a CQI and a PMI value for each subband. Herein, the size of each subband may depend on the size of the system band.

A UE in Mode 2-0 may select M preferred subbands for a system band or a band (set S) designated in a higher layer. The UE may generate one CQI value on the assumption that data is transmitted for the M selected subbands. Preferably, the UE additionally reports one CQI (wideband CQI) value for the system band or set S. If there are multiple codewords for the M selected subbands, the UE defines a CQI value for each codeword in a differential form.

In this case, the differential CQI value is determined as a difference between an index corresponding to the CQI value for the M selected subbands and a wideband (WB) CQI index.

The UE in Mode 2-0 may transmit, to a BS, information about the positions of the M selected subbands, one CQI value for the M selected subbands and a CQI value generated for the whole band or designated band (set S). Herein, the size of a subband and the value of M may depend on the size of the system band.

A UE in Mode 2-2 may select positions of M preferred subbands and a single precoding matrix for the M preferred subbands simultaneously on the assumption that data is transmitted through the M preferred subbands. Herein, a CQI value for the M preferred subbands is defined for each codeword. In addition, the UE additionally generates a wideband CQI value for the system band or a designated band (set S).

The UE in Mode 2-2 may transmit, to the BS, information about the positions of the M preferred subbands, one CQI value for the M selected subbands and a single PMI for the M preferred subbands, a wideband PMI, and a wideband CQI value. Herein, the size of a subband and the value of M may depend on the size of the system band.

A UE in Mode 3-0 generates a wideband CQI value. The UE generates a CQI value for each subband on the assumption that data is transmitted through each subband. In this case, even if RI > 1, the CQI value represents only the CQI value for the first codeword.

A UE in Mode 3-1 generates a single precoding matrix for the system band or a designated band (set S). The UE generates a CQI subband for each codeword on the assumption of the single precoding matrix generated for each subband. In addition, the UE may generate a wideband CQI on the assumption of the single precoding matrix. The CQI value for each subband may be expressed in a differential form. The subband CQI value is calculated as a difference between the subband CQI index and the wideband CQI index. Herein, the size of each subband may depend on the size of the system band.

A UE in Mode 3-2 generates a precoding matrix for each subband in place of a single precoding matrix for the whole band, in contrast with the UE in Mode 3-1.

2) Periodic CQI/PMI/RI transmission over PUCCH

The UE may periodically transmit CSI (e.g., CQI/PMI/PTI (precoding type indicator) and/or RI information) to the BS over a PUCCH. If the UE receives a control signal instructing transmission of user data, the UE may transmit a CQI over the PUCCH. Even if the control signal is transmitted over a PUSCH, the CQI/PMI/PTI/RI may be transmitted in one of the modes defined in the following table.

TABLE 7

| | | PMI feedback type | |
|---|---|---|---|
| | | No PMI | Single PMI |
| PUCCH CQI feedback type | Wideband (wideband CQI) | Mode 1-0 | Mode 1-1 |
| | UE selective (subband CQI) | Mode 2-0 | Mode 2-1 |

A UE may be set in transmission modes as shown in TABLE 7. Referring to TABLE 7, in Mode 2-0 and Mode 2-1, a bandwidth part (BP) may be a set of subbands consecutively positioned in the frequency domain, and cover the system band or a designated band (set S). In Table 7, the size of each subband, the size of a BP and the number of BPs may depend on the size of the system band. In addition, the UE transmits CQIs for respective BPs in ascending order in the frequency domain so as to cover the system band or designated band (set S).

The UE may have the following PUCCH transmission types according to a transmission combination of CQI/PMI/PTI/RI.

i) Type 1: the UE transmits a subband (SB) CQI of Mode 2-0 and Mode 2-1.
ii) Type 1a: the UE transmits an SB CQI and a second PMI.
iii) Types 2, 2b and 2c: the UE transmits a WB-CQI/PMI.
iv) Type 2a: the UE transmits a WB PMI.
v) Type 3: the UE transmits an RI.
vi) Type 4: the UE transmits a WB CQI.
vii) Type 5: the UE transmits an RI and a WB PMI.
viii) Type 6: the UE transmits an RI and a PTI.
ix) Type 7: theUE transmits a CRI(CSI-RS resource indicator) and an RI.
x) Type 8: the UE transmits a CRI, an RI and a WB PMI.
xi) Type 9: the UE transmits a CRI, an RI and a PTI (precoding type indication).
xii) Type 10: the UE transmits a CRI.

When the UE transmits an RI and a WB CQI/PMI, the CQI/PMI are transmitted in subframes having different periodicities and offsets. If the RI needs to be transmitted in the same subframe as the WB CQI/PMI, the CQI/PMI are not transmitted.

## Aperiodic CSI Request

If a carrier aggregation (CA) environment is considered, a 2-bit CSI request field is used in DCI format 0 or 4, for an aperiodic CSI feedback in the current LTE standards. If a plurality of serving cells are configured for a UE in the CA environment, the UE interprets the CSI request field in 2 bits. If one of TM 1 to TM 9 is configured for every component carrier (CC), an aperiodic CSI feedback is triggered according to values listed in Table 8 below. If TM 10 is configured for at least one of all CCs, an aperiodic CSI feedback is triggered according to values listed in Table 8 below.

[Table 8]

| Values of CSI request field | Description |
|---|---|
| ’00’ | Aperiodic CSI reporting is not triggered |
| ’01’ | Aperiodic CSI reporting is triggered for serving cell |
| ’10’ | Aperiodic CSI reporting is triggered for a first set of serving cells |
| | configured by higher layer |
| ’11’ | Aperiodic CSI reporting is triggered for a second set of serving cells configured by higher layer |

[Table 9]

| Values of CSI request field | Description |
|---|---|
| '00' | Aperiodic CSI reporting is not triggered |
| '01' | Aperiodic CSI reporting is triggered for CSI process set configured for serving cell by higher layer |
| '10' | Aperiodic CSI reporting is triggered for a first set of CSI processes configured by higher layer |
| '11' | Aperiodic CSI reporting is triggered for a second set of CSI processes configured by higher layer |

A wireless communication system appearing after LTE Rel-12 considers introducing an antenna system utilizing an active antenna system (hereinafter, AAS). Since the AAS corresponds to a system that each antenna is configured as an active antenna including an active circuit, the AAS is expected as a technology capable of reducing interference by changing an antenna pattern in accordance with a situation and the technology capable of more efficiently performing beamforming. When the AAS is configured as a two-dimensional AAS (2D-AAS), it is possible to more actively change a transmission beam according to a position of a receiving end by more efficiently and three-dimensionally adjusting a main lobe of an antenna in terms of antenna pattern. Since the 2D-AAS arranges antennas in vertical direction and horizontal direction, it is anticipated that a massive antenna system is to be constructed. A transmission/reception scheme performed according to the introduction/use of the 2D-AAS is referred to as EB (elevation beamforming)/FD (full dimension)-MIMO.

[Class A CSI reporting]

In FD-MIMO system, a base station can set a plurality of CSI-RS resources belonging to a single CSI process to a UE. The UE does not consider the CSI-RS resources configured within a single CSI process as an independent channel. The UE assumes the resources as a single huge CSI-RS resource by aggregating the resources. The UE calculates CSI based on the single huge CSI-RS resource and feed backs the calculated CSI. For example, if the base station sets three 4-port CSI-RS resources belonging to a single CSI process to the UE, the UE assumes one 12-port CSI-RS resource by aggregating the three 4-port CSI-RS resources. The UE calculates CSI based on the 12-port CSI-RS resource using 12-port PMI and feed backs the calculated CSI.

[Class B CSI reporting]

In FD-MIMO system, a base station can set a plurality of CSI-RS resources belonging to a single CSI process to a UE. For example, the base station can configure 8 CSI-RS resources within a single CSI process. Each of 8 CSI-RS resources can be configured by 4-port CSI-RS. It may apply different beamforming by applying different virtualization to each of 8 4-port CSI-RSs. For example, vertical beamforming is applied to a first CSI-RS with a zenith angle of 100 degrees. Since CSI-RSs are configured with a zenith angle difference of 5 degrees, vertical beamforming can be applied to an $8^{th}$ CSI-RS with a zenith angle of 135 degrees.

A UE assumes each of the CSI-RS resources as an independent channel and selects one from among the CSI-RS resources. The UE calculates and reports CSI on the basis of the selected resource. In particular, the UE selects a CSI-RS of a strong channel from among the 8 CSI-RS resources, calculates CSI on the basis of the selected CSI-RS, and reports the CSI to the base station. In this case, the UE additionally reports the selected CSI-RS to the base station via a CRI (CSI-RS resource indicator) value. For example, if a channel of the first CSI-RS is strongest, the UE configures CRI = 0 and reports the first CSI-RS to the base station.

In a full dimension-multiple input multiple output (FD-MIMO) environment, the use of multiple antenna ports (e.g., 16 to 64 ports) is under consideration. To this end, a channel measurement scheme for a large number of antenna ports is required. To reduce the overhead of channel measurement, an aperiodic CSI-RS (hereinafter, referred to as A-CSI-RS) is considered. Compared to the legacy CSI-RS, the A-CSI-RS is transmitted only at a specific time instance or during a specific time period, only when needed. For example, the A-CSI-RS may be transmitted in the following manners.

(a) of FIG. 5 illustrates a method of transmitting an A-CSI-RS by overriding the A-CSI-RS in resources carrying a periodic CSI-RS (hereinafter, referred to as P-CSI-RS) during a predetermined time period. For example, if a narrow beam is not suitable any longer for a UE using an A-CSI-RS to which the narrow beam is applied, an eNB may transmit an A-CSI-RS to which a wide beam is applied in corresponding resources to the UE, thus using the A-CSI-RS as a kind of "fallback CSI-RS" until a better beam is detected. (b) of FIG. 5 illustrates a method of defining separately configured A-CSI-RS resources. Particularly in this method, unlike the above example, resources for a P-CSI-RS are held, and an A-CSI-RS is provided in other resources, so that an operation such as measurement averaging of the P-CSI-RS may be performed without interruptions, and thus clear switching may take place between the P-CSI-RS and the A-CSI-RS. As such, if the A-CSI-RS is transmitted during a predetermined time period, and the time period is sufficiently long, the UE may calculate/report a CSI feedback for the A-CSI-RS in the form of a periodic CSI report.

**A-CSI-RS Feedback Signaling**

To use a periodic CSI feedback scheme for the A-CSI-RS, the eNB should transmit signaling for applying the periodic CSI feedback scheme to the UE. The signaling may be performed as follows.

A. Tied to A-CSI-RS Indication

I. When the eNB transmits A-CSI-RS indication signaling to the UE, the UE starts to measure the A-CSI-RS at a time instance when the UE receives the A-CSI-RS indication signaling or at a time instance indicated by the A-CSI-RS indication signaling (e.g., after k subframes from an instance when the A-CSI-RS indication is received, that is, in subframe n+k if the A-CSI-RS indication signaling is received in subframe n), and uses the periodic CSI feedback scheme for the A-CSI-RS from a time instance when the UE starts to measure the A-CSI-RS or at an indicated time instance (e.g., m subframes after the starting time of the measurement, that is, in subframe n+k+m if the A-CSI-RS is measured in subframe n+k). The following description is given with the appreciation that A-CSI-RS feedback signaling may refer to A-CSI-RS indication signaling.

B. Signaling Other Than A-CSI-RS Indication

I. Particularly in the case where P-CSI-RS resources are used by pooling as illustrated in (a) of FIG. 5, the UE may measure the A-CSI-RS without any A-CSI-RS indication. Therefore, the eNB may separately transmit signaling for CSI calculation/reporting for the A-CSI-RS to the UE.

i. DCI: The A-CSI-RS feedback signaling may be transmitted by DCI, for dynamic signaling. For example, a 2-bit DCI field may be added for A-CSI-RS feedback signaling for one of a total of 2 CSI processes. However, if there is no great need for configuring such a DCI field separately, and configuring A-CSI-RS feedback signaling as dynamic signaling, any other scheme (e.g., the following schemes) may be used

ii. MAC: MAC signaling is between DCI and RRC signaling in its features. That is, despite avoidance of the overhead of DCI, the MAC signaling increases delay, compared to DCI. However, if the delay is reasonable, it may be more preferable to use the MAC signaling than the RRC signaling.

a). A-CSI-RS configuration(s) requiring periodic CSI feedback are pre-configured for the UE by MAC signaling. (In the case of a plurality of A-CSI-RS configurations,) a part of the configurations may be selected, or (in the case of a single A-CSI-RS configuration,) the configuration may simply be triggered on/off, by DCI. In this way, a tradeoff may be possible to balance dynamic signaling of DCI with overhead reduction.

iii. RRC: A-CSI-RS feedback signaling may be transmitted to the UE by using an RRC reconfiguration. A long time delay is involved from transmission of RRC signaling to application of the RRC signaling. Nonetheless, the RRC signaling may be free from the constraint of a signaling field, thus offering more flexible signaling.

a). In this case, the eNB may directly indicate a full set or part of periodic feedback configurations (e.g., feedback type, period/offset, hierarchy (or priority level), etc.).

b). Or similarly to the above MAC signaling case, A-CSI-RS configuration(s) requiring periodic CSI feedback may be pre-configured for the UE by RRC signaling. (In the case of a plurality of configurations,) a part of the configurations may be selected, or (in the case of a single configuration), the configuration may simply be trigged on/off, by DCI. In this way, a tradeoff may be possible to balance dynamic signaling of DCI/MAC signaling with overhead reduction.

**(Periodic) Contents of Aperiodic CSI-RS**

In legacy LTE, CSI contents may include a CQI, a PMI, an RI, and a CRI, each of which may be CSI for a wideband/subband. When CSI is calculated by using the A-CSI-RS, CSI contents may be calculated/reported in a different manner from CSI based on the legacy P-CSI-RS, as follows.

A. Different Feedback Mode From That of P-CSI-RS

When the UE uses the A-CSI-RS, the UE may adopt a different feedback mode from that of the P-CSI-RS. For example, if the A-CSI-RS is used as a kind of "fallback CSI-RS" for the P-CSI-RS as described in the foregoing example, it is preferable to report more robust CSI for the A-CSI-RS to the eNB. Therefore, an operation scheme may be defined/configured, such as receiving a report of only subband CSI in Mode 2-1, when the P-CSI-RS is used, and receiving a report of wideband CSI in Mode 2-1, when the A-CSI-RS is used.

B. Different Port Subset From That of P-CSI-RS

When using the A-CSI-RS and the P-CSI-RS, the UE may calculate/report CSI for port subsets pre-configured for the respective CSI-RSs. For example, when a 16-port eNB transmits CSI-RSs, the eNB may transmit a 16-port CSI-RS as a P-CSI-RS via antenna port 15 to antenna port 30, and transmit an 8-port CSI-RS as an A-CSI-RS in the middle via antenna port 15 to antenna port 22 according to an A-CSI-RS feedback configuration (e.g., a shorter period), thereby receiving a report of more accurate channel information for some ports, not the total ports.

Additionally, this scheme may be used for hybrid MIMO. For example, if the eNB configures a 16-port CSI-RS as an A-CSI-RS during transmission of a P-CSI-RS in a subset of 8 ports, the A-CSI-RS may be used in a kind of hybrid MIMO class A + class B scheme by adopting class A FD-MIMO of the A-CSI-RS together with class B FD-MIMO of the P-CSI-RS.

C. Different Beam from That of P-CSI-RS

In the class B case, the UE may calculate/report CSI for the A-CSI-RS using a different beam from that of the P-CSI-RS. For example, the beam is applied to a CSI-RS in class B FD-MIMO. As the beam different from that of the P-CSI-RS is applied to the A-CSI-RS, CSI for a different beam direction from that of the P-CSI-RS may be reported.

The beam applied to the A-CSI-RS may be a beam from a beam group applied to a group of candidate resources for a legacy CSI-RS resource indicator (CRI). That is, the A-CSI-RS is transmitted on a beam applied to a different CRI. For example, when the eNB needs to switch to a new CRI due to poor CSI for a current P-CSI-RS, the eNB may apply a different beam to the A-CSI-RS so that the UE performs channel measurement on the beam, thereby additionally attempting evaluation of the new beam. Particularly, when using the A-CSI-RS, the UE may calculate/report CSI for beams corresponding to a plurality of CRIs. Accordingly, the UE may report a CRI for best resources, and this scheme may be used like a hybrid MIMO class B + class B scheme.

D. Aggregated CSI

CSI may be calculated/reported by aggregating a previously transmitted P-CSI-RS with a newly transmitted A-CSI-RS. The CSI-RSs may be aggregated based on the following conditions.

I. If an existing P-CSI-RS density is less than 1 RE/port/RB, CSI may be calculated/reported by aggregating the P-CSI-RS with the A-CSI-RS. Particularly in this case, the RS RE pattern of the A-CSI-RS may be configured not to overlap with the RS RE pattern of the P-CSI-RS, for the purpose of aggregation.

II. If existing P-CSI-RS ports are a subset of some ports, CSI may be calculated/reported by aggregating the port subset of the P-CSI-RS with the port subset of the A-CSI-RS. In this case, the port subset of the A-CSI-RS may be configured such that the port subsets of the A-CSI-RS and the P-CSI-RS are collectively exhaustive, without overlapping between them.

E. Additional CSI Contents

Only when CSI is calculated/reported only for the A-CSI-RS, a specific CSI type (e.g., a CRI) may be reported.

F. Frequency Granularity for CQI Calculation

I. Wideband CSI and subband CSI calculation/reporting may be configured. Particularly, "partial band CSI" may be configured. A partial band and a subband may be defined as follows.

- Partial Band: a band for a specific service that the UE is currently operating, within a wideband.
- Subband: a band which may be configured for the UE within the partial band.
  Or, a partial band may be frequency resources with a different system numerology such as a TTI, a subframe/slot length, a subcarrier spacing, etc. to support a different service from the viewpoint of the physical layer. Then, the partial band may be defined as follows.
- Partial Band: the largest bandwidth supported by the UE, with the same numerology (e.g., slot/subframe length, TTI, and subcarrier spacing) within the wideband.

In this case, partial band CSI may be pre-configured by higher-layer signaling (e.g., RRC signaling) due to semi-static frequency resource change characteristics, whereas subband CSI may need to be indicated dynamically according to the traffic state of the eNB, and thus dynamically by L1 signaling or L2 signaling. Notably, it is also possible to pre-configure candidate resources available for measurement of subband CSI by higher-layer signaling such as RRC signaling, and trigger on or off subband CSI dynamically by L1/L2 signaling.

For example, partial band configuration information (e.g., the starting and ending PRB indexes), and subband configuration information (e.g., subband size = N PRBs) may be configured by RRC signaling. If the subband configuration information is determined according to a predetermined rule, the subband configuration information may be excluded from the signaling. For example, the bandwidth of a subband may be determined to be N PRBs according to N determined based on a system bandwidth, the bandwidth of a UE-specific wideband, or the bandwidth of the subband. Subsequently, information indicating subbands for which CSI is to be measured/transmitted within the partial band may be included in the form of a bitmap in semi-persistent CSI triggering CSI. If a plurality of partial bands are configured, the eNB may indicate a partial band for which CSI is to be calculated to the UE by L1/L2 signaling.

Particularly, wideband CSI, partial band CSI, and subband CSI may be defined separately. That is, CSI may be divided into the three layers of wideband CSI, partial band CSI, and subband CSI. Regarding the subband CSI, a plurality of subbands for CSI may be defined within a partial band or wideband for which CSI is defined.

If the UE is not capable of monitoring the total system bandwidth, that is, if the UE has the capability of using only a part of the system bandwidth, the wideband may mean a configured maximum bandwidth available for the UE. If the UE is configured only for a specific service, a wideband RS and a partial band RS for the UE may have the same frequency granularity. That is, a wideband may be defined for a wideband RS, as follows.

- Wideband: the largest bandwidth supported by the UE.

If carrier aggregation is considered, it is natural to define CSI separately for each component carrier. Accordingly, the following definition may be more accurate.

- Wideband: the largest bandwidth supported by the UE per component carrier.

Or a band as large as or smaller than a maximum frequency band available for the UE may be configured for the eNB as a candidate bandwidth for data reception. This band may be defined as a wideband, and configured as one CSI-related operation unit. The wideband may be configured for the UE by, for example, a system information block (SIB). Or for more flexibility, the wideband may be configured by higher-layer signaling such as RRC signaling or the like. A plurality of such widebands may be configured within the maximum bandwidth supported by the UE. The widebands may overlap with each other. Therefore, regarding a wideband RS and wideband CSI, an RS transmission and CSI measurement/reporting operation for each wideband configured for the UE may be performed independently of an RS transmission and CSI measurement/reporting operation for aother wideband. In this case, a plurality of partial bands with different numerologies may be defined within each wideband (both TDM and FDM are possible). Such a partial band defined in a wideband on the side of the UE may correspond only to a part of a partial band (e.g., a band with the same numerology) on the side of the eNB. If a single numerology is defined for a wideband, wideband CSI may be identical to partial band CSI. Then, the partial band CSI may be omitted.

Characteristically, if the UE operates only in a specific partial band, such as performing only a specific operation (e.g., mMTC or a data subband operation), the eNB may configure a wideband for CSI with the same frequency granularity as that of a partial band for CSI, for the UE. In other words, the frequency areas occupied by the wideband and the partial band may be of the same size.

Particularly, a wideband may be a frequency band unit in which control information and/or data is transmitted to a UE, more characteristically, a unit in which one transport block (TB) may be transmitted. In this case, it may be assumed that partial bands with different numerologies within one wideband are not multiplexed in frequency division multiplexing (FDM) or are not multiplexed in FDM at least at a specific time instance. That is, the plurality of partial bands defined in the wideband may be multiplexed only in TDM. For example, although two partial bands having different subcarrier spacings but using frequency bands of the same size may be defined in a wideband, the partial bands are used at different timings.

To perform the above operation, a CSI process may separately be configured per wideband. That is, independent CSI-RS and CSI reporting configurations are given per "wideband", and CSI-RS transmission and CSI-RS measurement/reporting operations are performed independently per "wideband". In this case, CSI (or a plurality of pieces of CSI) for a plurality of widebands may be reported in one UL resource.

For the purpose of beam management or radio resource management (RRM) measurement, the UE may report CSI for an entire band that the UE can view. For example, a kind of "super-wideband" may be defined as a maximum frequency band or the total system bandwidth of a carrier, which is available for the UE, and the UE may report CSI for the super-wideband. In other words, if the UE supports the bandwidth of the super-wideband, the total bandwidth within one timing (e.g., slot) may be referred to as reference resources for CSI calculation. If the UE cannot support the total bandwidth at one time, the reference resources of the super-wideband may be a set of partial bandwidths distributed across a plurality of timings (e.g., slots). In this case or in a similar case in which smaller frequency granularities spanning a larger frequency granularity are defined in the large frequency granularity, and CSI is to be calculated for the large frequency granularity aggregated across a plurality of timings, the eNB may separately configure the time pattern (e.g., hopping pattern) of band elements to be aggregated, for the UE by L3 signaling such as RRC signaling. Herein, the CSI may include a CSI report for beam management, such as a beam index.

Or, a wideband refers to a frequency band carrying a control channel. The wideband may be a frequency band used for a control channel, not a frequency band in which data is scheduled. That is, a wideband RS may be transmitted in the frequency band used for the control channel, or CSI for the frequency band may be defined as wideband CSI. If a band carrying data is different from a band carrying a control channel, the UE may report CSI for the control channel by wideband CSI, thereby enabling more stable transmission of the control channel.

G. Different Numerology Assumption

I. Aside from the above-described frequency granularities, a numerology assumption may be indicated directly to the UE. The UE calculates and reports CSI on the assumption of a numerology indicated by the eNB irrespective of the numerology (e.g., subcarrier spacing, symbol length, etc.) of an RS transmitted by the eNB.

II. Or, in order to reduce additional signaling overhead, the UE may calculate and report CSI on the assumption of the numerology of an RS transmitted by the eNB, or a numerology used in an indicated wideband/partial band/subband.

III. For the above purposes or without additional signaling in this case, it may be assumed that a numerology used to deliver a control channel is used.

H. Frequency Resource Indication

I. Irrespective of the above frequency granularities, frequency resources for which CSI is to be calculated may be indicated directly to the UE. In this case, the UE calculates CSI, assuming the indicated frequency resources to be reference resources. The UE may assume these frequency resources to be a wideband. That is, the eNB may indicate a "wideband" to the UE. Unlike the above case, dynamic signaling may be performed by L1/L2 signaling.

i. When CSI is to be calculated for one large frequency granularity resulting from aggregation of small frequency granularities spanning the large frequency granularity across a plurality of timings, the eNB may separately indicate to the UE the time pattern (e.g., hopping pattern) of band elements to be aggregated by L1/L2 signaling. To reduce L1/L2 signaling overhead, one of a plurality of patterns pre-defined by signaling such as RRC signaling may be indicated to the UE by L1/L2 signaling.

**Periodic CSI Feedback Configuration (Periodic Feedback for A-CSI-RS)**

A. Configuration

The above-described A-CSI-RS may be configured in a separate CSI process configured for the A-CSI-RS. Or a plurality of CSI-RS resources may be configured in one CSI process, and a part or all of the CSI-RS resources may be defined for the A-CSI-RS. The configuration may be indicated to the UE by RRC signaling, and periodic CSI feedback configurations for the A-CSI-RS may be given as follows.

I. Tied to A-CSI-RS Resource Configuration

i. As illustrated in (a) of FIG. 6, a periodic CSI feedback configuration for the A-CSI-RS may be configured in each A-CSI-RS resource configuration.

II. Periodic CSI Feedback Configuration Separate from A-CSI-RS Resource Configuration

i. As illustrated in (b) of FIG. 6, a periodic CSI feedback configuration for the A-CSI-RS may be configured in a CSI process, separately from an A-CSI-RS resource configuration. Particularly, after a plurality of periodic CSI feedback configurations are configured, which one is to be used from among the periodic CSI feedback configurations may be indicated to the UE by A-CSI-RS feedback signaling (e.g., MAC signaling).

III. Common Periodic CSI Feedback Configuration in CSI Process

i. As illustrated in (c) of FIG. 6, a common periodic CSI feedback configuration may be configured in a CSI process. In this case, CSI is reported to the eNB by using an indicated periodic CSI feedback configuration irrespective of whether resources are used for a P-CSI-RS or an A-CSI-RS. Particularly, a plurality of periodic CSI feedback configurations may be configured in a CSI process. In this case, which feedback configuration is to be used may be indicated to the UE by higher-layer signaling such as RRC or MAC signaling.

B. Configuration Contents

For this purpose, an A-CSI-RS feedback configuration may include the following contents.

I. Feedback type: contents to be fed back.

II. Feedback period/offset: a period/offset with which to transmit each feedback content.

III. Hierarchy (priority level) for feedback type: a priority level in the case of overlap between transmission timings of different types. The priority level may be included in the configuration or pre-defined separately. Particularly, when different CSI processes and resources overlap with each other in terms of their feedback timings, CSI with a higher priority level (e.g., a CRI) may be defined and thus have a separate hierarchy, irrespective of the indexes of the CSI processes and resources. For example, if the feedback timing of a PMI with CSI process index = 0 overlaps with the feedback timing of a CRI with CSI process index = 1, the CRI of CSI process 1 may be transmitted instead of the PMI of an existing CSI process, CSI process 0.

**CRI/RI/W1 Feedback Timing**

As illustrated in FIG. 5, an A-CSI-RS transmission may be indicated to the UE by A-CSI-RS enable/disable signaling, so that an A-CSI-RS may be transmitted in a predetermined period. As such, if periodic CSI feedback for the A-CSI-RS is enabled, the UE reports feedback contents (e.g., RI, W1, W2, and CQI) corresponding to respective time instances to the eNB through a PUCCH.

In this case, however, since information placed in a hierarchical relationship, for example, an RI is used for subsequent CSI (e.g., W1, W2, or CQI) calculation, a mismatch of specific information occurs before and after an enabled time instance. For example, if RI=2 before the enabled time instance but (best) RI=1 after the enabled time instance, calculation of CSI on the assumption that RI=2 brings about performance degradation. A similar problem also occurs to feedback of CSI for a P-CSI-RS at a disabled time instance. Therefore, there is a need for avoiding a mismatch in corresponding information before and after an enabled/disabled time instance.

A. Automatic Offset Shift

Information having the highest hierarchy (e.g., an RI) is first transmitted at the first feedback time instance after an A-CSI-RS enabled/disabled time instance. For this purpose, an offset for CSI having the highest hierarchy may be configured based on to a corresponding enable signaling time instance, and offsets for the remaining CSI may be given relatively to the offset for the CSI having the highest hierarchy. It is assumed that a container carrying a periodic CSI feedback for the existing P-CSI-RS is still used as a container carrying CSI. Therefore, the first CSI container after the A-CSI-RS enabled time instance is used for CSI having the highest hierarchy, that is, for RI transmission, and the time interval from the A-CSI-RS enabled time instance to the CSI container may be determined to be an offset for the RI.
In the same manner, a periodic CSI feedback offset for the P-CSI-RS may also be given as a corresponding offset for an A-CSI-RS disabled time instance. That is, CSI having the highest hierarchy (e.g., RI) may first be transmitted at the first feedback time instance after the A-CSI-RS disabled time instance. In this case, offset-related information may not be given for the highest-priority CSI (e.g., RI) used as a reference in a periodic CSI feedback configuration for the A-CSI-RS and/or the P-CSI-RS. However, a relative reporting offset from the reference CSI type (e.g., RI) may be given.

B. Enable/Disable Signaling Timing Limited by CRI/RI Feedback Timing

Unlike the above case, a time instance when an A-CSI-RS feedback may be enabled/disabled may be limited. For example, let a time instance when CSI having the highest hierarchy, for example, an RI is transmitted be denoted by n. Then, the CSI-RS feedback enabled/disabled time instance may be limited to n-k where k may be a time taken to measure a CSI-RS and calculate the CSI having the highest hierarchy, for example, the RI.
Or, the time instance when the A-CSI-RS feedback enable/disable signaling is applied may be limited to the time instance n when the CSI having the highest hierarchy is transmitted irrespective of a time instance when the A-CSI-RS feedback enable/disable signaling is transmitted/received. Herein, the transmission of the A-CSI-RS may take place at or before the time instance n-k.
The afore-described A-CSI-RS feedback enabled/disabled time instance may explicitly indicated to the UE by L1 or L2 signaling. In this case, a time instance indicated by each signaling may be determined by an offset for periodic reporting, as described above.
Particularly, regarding the above method of indicating an A-CSI-RS feedback enabled/disabled time instance, the A-CSI-RS feedback enabled/disabled time instance may be preset to a time instance after a predetermined offset X from a time instance when L1/L2 signaling is received. For example, if A-CSI-RS feedback is enabled/disabled by L1 signaling, X=0 and thus an offset for CSI reporting may be set to the time instance when the L1 signaling is received. Or in the case of L2 signaling, a time instance when a MAC CE is applied may be set from a time instance when a PDSCH including the MAC CE is received. For example, if the PDSCH including the MAC CE is received in subframe n, the offset for CSI reporting may be set to subframe n+8.
If hierarchies are not configured between a plurality of CSI reporting types, offsets for the CSI reporting types may be determined based on an enable/disable signaling time instance. For example, if an RI, a PMI, and a CQI are reported to the eNB in an aperiodic CSI reporting scheme, the offsets may be set to 0 for the RI, 1 for the PMI, and 2 for the CQI, respectively. This case amount to, if the enabled time instance is no, defining the offsets as no for RI reporting, no+1 for PMI reporting, and no+2 for CQI reporting, respectively.
Regarding the above-described time instances, the unit of X (e.g., subframe, slot, symbol, or the like) may vary according to the transmission numerology and CSI reporting scheme of UL resources.

## A-CSI-IM

Like the A-CSI-RS, an aperiodic CSI-interference measurement (IM) (hereinafter, referred to as an A-CSI-IM) (resource) may be configured, for interference measurement. Although this configuration is similar to the above A-CSI-RS configuration, the UE regards the measurement result of a corresponding RS as interference in calculating CSI.
FIG. 8 illustrates examples of an A-CSI-IM. If the above A-CSI-IM is used, the A-CSI-IM is transmitted along with an X-CSI-RS (P-CSI-RS or A-CSI-RS) serving as a desired signal, and the UE reports CSI for which the A-CSI-IM is used as interference. For example, the A-CSI-IM may be used in a multi-user (MU) case or coordinated multiple transmission/reception points (CoMP). For the MU case, if UE1 and UE2 exist, the eNB may transmit to UE1 an A-CSI-IM to which a beam used for UE2 is applied. UE1 may calculate CSI to which the A-CSI-IM is applied and report the calculated CSI to the eNB. Particularly, in the illustrated case of (b) of FIG. 8, the UE may calculate CSI, considering a P-CSI-RS to be a desired signal and an A-CSI-IM to be interference. In the CoMP case, interference to eNB1 and eNB2 instead of UE1 and UE2 may be emulated as corresponding A-CSI-IMs and then transmitted.
Further in this case, an A-CSI-IM based on a different interference assumption may be transmitted at each A-CSI-IM time instance. For example, if the A-CSI-IM is transmitted every 5ms for 20ms in total, interference emulated as the A-CSI-IM may be transmitted, with interference emulated for UE2, UE3, UE4, and UE5 at the respective transmission time instances.

i. In this case, a CSI feedback instance corresponding to each A-CSI-IM may be defined, and the UEs may report CSI corresponding to the respective A-CSI-IMs (e.g., MU CSI with assumptions for UE2, UE3, UE4, and UE5).

The above A-CSI-IM configuration may be configured as follows.

B. An A-CSI-IM resource is configured separately in a CSI process. A configuration such as the transmission period/offset of a corresponding A-CSI-IM is not given separately. Instead, the configuration of an X-CSI-RS transmitted together with the A-CSI-IM (e.g., at the transmission timing of a P-CSI-RS in (b) of FIG. 8) is conformed to. The eNB transmits an A-CSI-IM indication to the UE, and the UE may calculate CSI by using a corresponding A-CSI-IM, and report the calculated CSI to the eNB.

I. An A-CSI-IM may be indicated by separate signaling configured for the A-CSI-IM. In this case, the A-CSI-RS and the A-CSI-IM may be used at the same time as illustrated in FIG. 4(c). Particularly when DCI is used, the eNB may indicate transmission of an A-CSI-IM in each subframe, instead of on/off of the A-CSI-IM.

i. In this case, a CSI feedback instance corresponding to each A-CSI-RS/A-CSI-IM may be defined, and CSI corresponding to each A-CSI-RS/A-CSI-IM (e.g., A-CSI-RS CSI is single user CSI (SU CSI)/A-CSI-IM CSI is MU CSI) may be reported.

II. A corresponding A-CSI-IM resource (and/or a CSI process including a corresponding A-CSI-IM) may be indicated by an A-CSI-IM indication. This case may be used in the situation illustrated (a) or (b) of FIG. 8. Or if an A-CSI-RS indication indicates an A-CSI-RS and A-CSI-IM pair which is pre-defined or configured by higher-layer signaling, or a CSI process with both an A-CSI-RS and an A-CSI-IM defined therein, the A-CSI-RS indication may also be used in the situation illustrated in (c) of FIG. 8.

C. A general-purpose A-CSI-RS/A-CSI-IM resource may be configured. Other configurations may be transmitted in the same manner as for the A-CSI-RS, expect for addition of the configuration that the resource is available for both the A-CSI-RS and the A-CSI-IM.

I. The eNB transmits an A-CSI-RS/A-CSI-IM indication to the UE, and transmits signaling indicating whether a corresponding resource is to be used for the A-CSI-RS or the A-CSI-IM in A-CSI-RS feedback signaling (e.g., an A-CSI-RS/A-CSI-IM indication in DCI). This scheme may be used in the cases of (a) and (b) of FIG. 8. Herein, the A-CSI-RS/A-CSI-IM may change in each subframe.

i. In this case, a CSI feedback instance corresponding to each A-CSI-RS/A-CSI-IM may be defined, and CSI corresponding to each A-CSI-RS/A-CSI-IM (e.g., A-CSI-RS CSI is SU CSI/A-CSI-IM CSI is MU CSI) may be reported.

II. Apart from the A-CSI-RS/A-CSI-IM indication, the eNB indicates whether a corresponding A-CSI-RS/A-CSI-IM is an A-CSI-RS or an A-CSI-IM to the UE by A-CSI-RS feedback signaling through higher-layer signaling such as MAC signaling. This scheme may be used in all cases of FIG. 8. Then, the UE may calculate and report MU CSI or CoMP CSI, assuming that a corresponding property is maintained during the same A-CSI-RS(IM) transmission period.

In FD-MIMO and new radio access technology (NR)-MIMO, semi-persistent (SP)-CSI reporting is defined. The SP-CSI reporting has the following features.

- A time period during which periodic CSI reporting is performed is configured for the UE in a manner such as enabling/disabling.
- The UE reports CSI in schedule-less UL resources (e.g., a PUCCH) to the eNB in a given interval during the time period.

That is, this scheme has the same feature as the case of enabling/disabling by signaling separate from signaling for an A-CSI-RS from among the afore-described A-CSI-RS feedback signalings. Thus, it is apparent that A-CSI-RS feedback as mentioned in the present patent may be regarded as SP-CSI reporting.

**Report Timing Indication**

An SP-CSI enabled/disabled time instance, that is, an offset for SP-CSI may be indicated as a time instance n+k to the UE by L1/L2 signaling. Herein, n may be configured as follows.

A. L1 Signaling

i. A timing (n+k) at which CSI report enable/disable (i.e., feedback offset) is configured based on a time instance n when DCI is received may be indicated to the UE. FIG. 9 illustrates an example of this operation.
ii. The transmission time instance of a CSI-RS configured for CSI reporting may be set to n.

a. For an A-CSI-RS, the CSI-RS transmission time instance may be set to n.
b. For an SP-CSI-RS, the first CSI-RS transmission time instance after the reception of the DCI may be set to n.

B. L2 Signaling

i. A timing (n+k) at which CSI reporting enable/disable (i.e., feedback offset) is configured based on a time instance n when a PDSCH including a MAC CE is received may be indicated to the UE.
ii. A timing (n+k) at which CSI reporting enable/disable (i.e., feedback offset) is configured based on a time instance n when an ACK/NACK for a PDSCH including a MAC CE is received may be indicated to the UE.
iii. The transmission time instance of a CSI-RS configured for CSI reporting may be set to n.

a. For an A-CSI-RS, the CSI-RS transmission time instance may be set to n.
b. For an SP-CSI-RS, the first CSI-RS transmission time instance after the reception of the PDSCH including the MAC CE may be set to n.

In the case of L2 signaling, a parameter p (e.g., p=8 subframes) may be predefined in consideration of a time instance when a MAC CE is applied, and it may be indicated to the UE whether CSI reporting enable/disable is configured at a time instance n+p+k.

Particularly, if CSI reporting is enabled/disabled by indicating one of higher-layer configurations such as MAC configurations by L1 signaling, what configuration is indicated by the corresponding enable/disable signaling may be ambiguous according to the application timing of the configuration. As such, if the configuration indicated by the corresponding signaling is indicated to the UE by MAC, the UE may assume that a CSI reporting configuration received from the eNB by the UE is applied, starting from the same timing. In other words, if the UE receives a PDSCH including a new CSI reporting configuration at a time instance n, the UE may understand the PDSCH as an SP-CSI trigger for a previous CSI reporting configuration before the above timing (i.e., t<n(+p)+k), and a new configuration trigger after the timing (i.e., t>=n(+p)+k).

The CSI feedback timing k may be set in the following methods.

- A fixed timing k may be pre-defined.
- If an RS timing is defined as n, a CSI feedback timing may also be indicated to the UE only by a CSI-RS transmission/measurement timing indication.
- If an RS timing is defined as n, k may be set to 4ms or its equivalent timing (e.g., 4 subframes).
- A fixed timing k may be included in a CSI process, a stage configuration, or an RS configuration.
- If an RS timing is defined as n, a CSI feedback timing may also be indicated to the UE only by a CSI-RS transmission/measurement timing indication.
- A range of k may be preset. A k value within the range may be indicated to the UE by L1/L2 signaling through SP-CSI enable/disable signaling.
- A range of k may be included in a CSI process, a stage configuration, or an RS configuration. A k value within the range may be indicated to the UE by L1/L2 signaling through SP-CSI enable/disable signaling.

If CSI is calculated by using measurements for a plurality of timings, as is done in the case where an interference measurement resource (IMR) indicated for use in corresponding CSI reporting is an SP-CSI-IM, and measurement report (MR) is set to off for the IMR, a time period spanning (v-k) may be ensured for CSI measurement by considering CSI transmitted from a time instance n+v to be valid. Herein, v(>=k) is a predefined value. For example, v=24 subframes. If the IMR used for the CSI reporting is a one-shot IMR or an SP-CSI-IM, and MR is set to ON, v=k. That is, all transmitted CSI may be valid.

The v value may not be a time but the number of CSI-RS transmissions/measurements counted from the time instance n+k. In this case, the v value may satisfy v>=1.

Disable signaling may be transmitted to the eNB in a similar manner to the enable signaling. Compared to the enable signaling, the disable signaling indicates the ending time of SP-CSI reporting to the UE.

Alt 1. Explicit "Disable" Signaling.

With a "Disable" state included in SP signaling, the eNB may transmit the signaling/state to the UE in order not to receive any more SP-CSI report. Although an explicit configuration may be given to the UE, one of enable and disable states represented by a bit field in DCI should be used to transmit the corresponding signaling to the UE.

Alt 2. Toggling

If SP enable signaling is transmitted for the same configuration, corresponding SP-CSI reporting may be disabled at an indicated timing. For example, in the case where a total of four CSI configurations are configured by L2/L3 signaling, and enable signaling is transmitted to the UE by indicating one of the CSI configurations by a 2-bit field in DCI, if with "CSI reporting configuration 1" enabled by a state "01", the eNB transmits the same "01 enable" signaling to the UE, the UE does not report corresponding SP-CSI any longer, interpreting the signaling as "disable".

Alt 3. Reconfiguration

If a specific attribute in an SP-CSI configuration is configured as a predetermined value, for example, the specific attribute is reconfigured as "0" resource for CSI and/or "0" period for CSI reporting, the UE may determine that corresponding SP-CSI is not to be reported. This scheme may be confined to L2 signaling in consideration of signaling overhead.

Alt 4. Duration

Like beam management, if CSI is to be measured/reported for a preset operation, a time period during which CSI reporting is to be performed may be preset. However, since larger signaling overhead than those of the above "explicit "disable" signaling" and "toggling" schemes is expected in this case, this scheme may be confined to L2 signaling.

Alt 5. Automatic SP-CSI Reporting Off for Specific Transmission Scheme

For example, if an extreme or enhanced mobile broadband (eMBB) service is switched to an ultra-reliable and low latency communication (URLLC) service, on-going SP-CSI reporting may be discontinued.

In another example, if closed-loop transmission is switched to open-loop transmission due to fallback or the like, on-going SP-CSI reporting may be discontinued.

In the above schemes, the discontinuation may be considered to be temporary. Thus, once the eMBB service is used again, the SP-CSI reporting resumes with the same configuration (e.g., period, offset, etc.). In this case, if there is a high probability of resuming the SP-CSI reporting (e.g., URLLC data transmission for a short time), SP-CSI enable signaling may be reduced.

Or, a timing indication may be included in disable signaling, to thereby indicate to the UE a time period during which the signaling is valid, that is, a time instance when SP-CSI reporting is to be terminated. The timing indication is in the form of n+k(+v) (k is not included), similarly to the timing indication included in the enable signaling, and n and v have similar meanings to in the enable signaling. The k value indicates a time instance when the UE actually terminates SP-CSI reporting, and the UE may report SP-CSI only until a time instance satisfying t<n+k(+v), and stop the reporting from a time instance satisfying t>=n+k(+v). The UE may not calculate SP-CSI which is to be reported at a time instance n+k(+v), any longer.

Likewise, if the eNB indicates to the UE the last CSI reporting time instance instead of disable signaling, the UE may report SP-CSI only until a time instance satisfying t<=n+k(+v), and stop reporting the SP-CSI from a time instance satisfying t>n+k(+v).

While the present patent proposes techniques of periodic CSI reporting in the case of using an A-CSI-RS, the same thing may apply to aperiodic CSI reporting based on an A-CSI-RS. For example, when aperiodic CSI is calculated/reported using an A-CSI-RS, the CSI may also be included for periodic CSI. Further, an A-CSI-IM for aperiodic CSI reporting may also be used in the same manner as, and together with, a one-shot transmitted A-CSI-RS. In addition, the above techniques may be performed alone or in combination in real implementation.

FIG. 12 is a flowchart illustrating an operation according to an embodiment of the present invention.

FIG. 12 relates to a method of reporting a channel state based on an aperiodic channel state information-reference signal (CSI-RS) in a wireless communication system.

The UE may receive a channel state reporting indication based on the aperiodic CSI-RS (S1210). The UE may transmit CSI derived from the aperiodic CSI-RS according to the channel state reporting indication (S1220). The aperiodic CSI-RS may periodically be received during a predetermined time period, the CSI transmitted at a first valid CSI reporting time instance after the reception of the channel state reporting indication may include information having a highest-priority type, and a transmission offset for the information having the highest-priority type is determined based on a time instance when the channel state reporting indication is received.

The channel state reporting indication may be configured to be received at a predetermined time.

A transmission offset for information having a remaining-priority type in the derived CSI may be determined relatively from the transmission offset for the information having the highest-priority type.

The derived CSI may be transmitted on an uplink control channel during a predetermined time period.

The received channel state reporting indication may be applied at a time instance which is predetermined or explicitly configured by other signaling.

While the embodiments of the present invention have been described briefly with reference to FIG. 12, the embodiment related to FIG. 12 may alternatively or additionally include at least a part of the foregoing embodiment(s).

FIG. 13 is a block diagram of a transmitting device 10 and a receiving device 20 configured to implement exemplary embodiments of the present invention. Referring to FIG. 13, the transmitting device 10 and the receiving device 20 respectively include transmitter/receiver 13 and 23 for transmitting and receiving radio signals carrying information, data, signals, and/or messages, memories 12 and 22 for storing information related to communication in a wireless communication system, and processors 11 and 21 connected operationally to the transmitter/receiver 13 and 23 and the memories 12 and 22 and configured to control the memories 12 and 22 and/or the transmitter/receiver 13 and 23 so as to perform at least one of the above-described embodiments of the present invention.

The memories 12 and 22 may store programs for processing and control of the processors 11 and 21 and may temporarily storing input/output information. The memories 12 and 22 may be used as buffers. The processors 11 and 21 control the overall operation of various modules in the transmitting device 10 or the receiving device 20. The processors 11 and 21 may perform various control functions to implement the present invention. The processors 11 and 21 may be controllers, microcontrollers, microprocessors, or microcomputers. The processors 11 and 21 may be implemented by hardware, firmware, software, or a combination thereof. In a hardware configuration, Application Specific Integrated Circuits (ASICs), Digital Signal Processors (DSPs), Digital Signal Processing Devices (DSPDs), Programmable Logic Devices (PLDs), or Field Programmable Gate Arrays (FPGAs) may be included in the processors 11 and 21. If the present invention is implemented using firmware or software, firmware or software may be configured to include modules, procedures, functions, etc. performing the functions or operations of the present invention. Firmware or software configured to perform the present invention may be included in the processors 11 and 21 or stored in the memories 12 and 22 so as to be driven by the processors 11 and 21.

The processor 11 of the transmitting device 10 is scheduled from the processor 11 or a scheduler connected to the processor 11 and codes and modulates signals and/or data to be transmitted to the outside. The coded and modulated signals and/or data are transmitted to the transmitter/receiver 13. For example, the processor 11 converts a data stream to be transmitted into K layers through demultiplexing, channel coding, scrambling and modulation. The coded data stream is also referred to as a codeword and is equivalent to a transport block which is a data block provided by a MAC layer. One transport block (TB) is coded into one codeword and each codeword is transmitted to the receiving device in the form of one or more layers. For frequency up-conversion, the transmitter/receiver 13 may include an oscillator. The transmitter/receiver 13 may include Nt (where Nt is a positive integer) transmit antennas.

A signal processing process of the receiving device 20 is the reverse of the signal processing process of the transmitting device 10. Under the control of the processor 21, the transmitter/receiver 23 of the receiving device 10 receives RF signals transmitted by the transmitting device 10. The transmitter/receiver 23 may include Nr receive antennas and frequency down-converts each signal received through receive antennas into a baseband signal. The transmitter/receiver 23 may include an oscillator for frequency downconversion. The processor 21 decodes and demodulates the radio signals received through the receive antennas and restores data that the transmitting device 10 wishes to transmit.

The transmitter/receiver 13 and 23 include one or more antennas. An antenna performs a function of transmitting signals processed by the transmitter/receiver 13 and 23 to the exterior or receiving radio signals from the exterior to transfer the radio signals to the transmitter/receiver 13 and 23. The antenna may also be called an antenna port. Each antenna may correspond to one physical antenna or may be configured by a combination of more than one physical antenna element. A signal transmitted through each antenna cannot be decomposed by the receiving device 20. A reference signal (RS) transmitted through an antenna defines the corresponding antenna viewed from the receiving device 20 and enables the receiving device 20 to perform channel estimation for the antenna, irrespective of whether a channel is a single RF channel from one physical antenna or a composite channel from a plurality of physical antenna elements including the antenna. That is, an antenna is defined such that a channel transmitting a symbol on the antenna may be derived from the channel transmitting another symbol on the same antenna. An transmitter/receiver supporting a MIMO function of transmitting and receiving data using a plurality of antennas may be connected to two or more antennas.

In embodiments of the present invention, the UE or the terminal operates as the transmitting device 10 on uplink, and operates as the receiving device 20 on downlink. In embodiments of the present invention, the eNB or the base station operates as the receiving device 20 on uplink, and operates as the transmitting device 10 on downlink.

The transmitting device and/or the receiving device may be configured as a combination of one or more embodiments of the present invention.

Detailed descriptions of preferred embodiments of the present invention have been given to allow those skilled in the art to implement and practice the present invention. Although descriptions have been given of the preferred embodiments of the present invention, it will be apparent to those skilled in the art that various modifications and variations can be made in the present invention defined in the appended claims. Thus, the present invention is not intended to be limited to the embodiments described herein, but is intended to have the widest scope consistent with the claims.

## Industrial Applicability

The present invention can be used for such a wireless communication device as a terminal, a relay, a base station, and the like.

## Claims

**1.** A method of performing a channel state report in a wireless communication system, the method performed by a user equipment (10) and comprising:

receiving downlink control information, DCI, for activating a semi-persistent channel state information, SP CSI, report; and
deriving and reporting SP CSI based on a CSI-reference signal, CSI-RS, in response to the received DCI,
wherein a time instance of firstly reporting the SP CSI is determined based on a timing offset (k) and a time instance (n) in which the DCI is received, the timing offset (k) being indicated by the DCI, and
wherein the SP CSI is periodically reported with a configured period from the time instance of firstly reporting the SP CSI.

**2.** The method of claim 1, wherein the timing offset (k) is indicated by the DCI from among a plurality of preset timing offset values.

**3.** The method of claim 1 or 2, wherein the DCI for activating the SP CSI report is configured to be received at a predetermined time instance.

**4.** The method of claim 3, wherein the SP CSI to be firstly reported after the DCI for activating the SP CSI report is received includes information having a highest-priority type.

**5.** The method of claim 4, wherein a transmission offset for information having a remaining-priority type in the derived SP CSI is determined relatively from the transmission offset for the information having the highest-priority type.

**6.** The method of any one of claims 1 to 5, wherein the SP CSI report is deactivated by another DCI.

**7.** A user equipment (10) configured to perform a channel state report in a wireless communication system, the user equipment (10) comprising:

a transmitter and a receiver (13); and
a processor (11) configured to control the transmitter and the receiver (13),
wherein the processor (11) is configured to:

receive downlink control information, DCI, for activating a semi-persistent channel state information, SP CSI, report; and

derive and report SP CSI based on a CSI-reference signal, CSI-RS, in response to the received DCI,

wherein a time instance of firstly reporting the SP CSI is determined based on a timing offset (k) and a time instance (n) in which the DCI is received, the timing offset (k) being indicated by the DCI, and

wherein the SP CSI is periodically reported with a configured period from the time instance of firstly reporting the SP CSI.

**8.** The user equipment of claim 7, wherein the timing offset (k) is indicated by the DCI from among a plurality of preset timing offset values.

**9.** The user equipment of claim 7 or 8, wherein the DCI for activating the SP CSI report is configured to be received at a predetermined time instance.

**10.** The user equipment of claim 9, wherein the SP CSI to be firstly reported after the DCI for activating the SP CSI report is received includes information having a highest-priority type.

**11.** The user equipment of claim 10, wherein a transmission offset for information having a remaining-priority type in the derived SP CSI is determined relatively from the transmission offset for the information having the highest-priority type.

**12.** The user equipment of any one of claims 7 to 11, wherein the SP CSI report is deactivated by another DCI.

**13.** A method of receiving a channel state report in a wireless communication system, the method performed by a base station and comprising:

transmitting downlink control information, DCI, for activating a semi-persistent channel state information, SP CSI, report; and

receiving SP CSI based on a CSI-reference signal, CSI-RS, in response to the transmitted DCI,

wherein a time instance of firstly receiving the SP CSI is determined based on a timing offset (k) and a time instance (n) in which the DCI is transmitted, the timing offset (k) being indicated by the DCI, and

wherein the SP CSI is periodically received with a configured period from the time instance of firstly receiving the SP CSI.

## Patentansprüche

**1.** Verfahren zum Durchführen eines Kanalzustandsberichts in einem Drahtloskommunikationssystem, wobei das Verfahren durch ein Anwendergerät (10) durchgeführt wird und Folgendes umfasst:

Empfangen von Abwärtsstreckensteuerinformationen, DCI, zum Aktivieren eines Berichts halbbeständiger Kanalzustandsinformationen, SP-CSI-Bericht; und

Herleiten und Berichten von SP-CSI auf der Grundlage eines CSI-Bezugssignals, CSI-RS, in Reaktion auf die empfangenen DCI, wobei

ein Zeitpunkt des ersten Berichtens der SP-CSI auf der Grundlage eines Zeitversatzes (k) und eines Zeitpunkts (n), zu dem die DCI empfangen werden, bestimmt wird, wobei der Zeitversatz (k) durch die DCI angegeben wird, und

die SP-CSI mit einem konfigurierten Zeitraum ab dem Zeitpunkt des ersten Berichtens der SP-CSI periodisch berichtet werden.

**2.** Verfahren nach Anspruch 1, wobei der Zeitversatz (k) durch die DCI aus mehreren voreingestellten Zeitversatzwerten angegeben wird.

**3.** Verfahren nach Anspruch 1 oder 2, wobei die DCI zum Aktivieren des SP-CSI-Berichts konfiguriert sind, zu einem vorgegebenen Zeitpunkt empfangen zu werden.

**4.** Verfahren nach Anspruch 3, wobei die SP-CSI, die zunächst berichtet werden sollen, nachdem die DCI zum Aktivieren des SP-CSI-Berichts empfangen worden sind, Informationen enthalten, die einen Typ höchster Priorität besitzen.

5. Verfahren nach Anspruch 4, wobei ein Übertragungsversatz für Informationen, die einen Typ verbleibender Priorität besitzen, in den hergeleiteten SP-CSI aus dem Übertragungsversatz für die Informationen, die den Typ höchster Priorität besitzen, relativ bestimmt wird.

6. Verfahren nach einem der Ansprüche 1 bis 5, wobei der SP-CSI-Bericht durch weitere DCI deaktiviert wird.

7. Anwendergerät (10), das konfiguriert ist, einen Kanalzustandsbericht in einem Drahtloskommunikationssystem durchzuführen, wobei das Anwendergerät (10) Folgendes umfasst:

einen Sender und einen Empfänger (13) und
einen Prozessor (11), der konfiguriert ist, den Sender und den Empfänger (13) zu steuern, wobei
der Prozessor (11) konfiguriert ist zum
Empfangen von Abwärtsstreckensteuerinformationen, DCI, zum Aktivieren eines Berichts halbbeständiger Kanalzustandsinformationen, SP-CSI-Bericht; und
Herleiten und Berichten von SP-CSI auf der Grundlage eines CSI-Bezugssignals, CSI-RS, in Reaktion auf die empfangenen DCI, wobei
ein Zeitpunkt des ersten Berichtens der SP-CSI auf der Grundlage eines Zeitversatzes (k) und eines Zeitpunkts (n), zu dem die DCI empfangen werden, bestimmt wird, wobei der Zeitversatz (k) durch die DCI angegeben wird, und
die SP-CSI mit einem konfigurierten Zeitraum ab dem Zeitpunkt des ersten Berichtens der SP-CSI periodisch berichtet werden.

8. Anwendergerät nach Anspruch 7, wobei der Zeitversatz (k) durch die DCI aus mehreren voreingestellten Zeitversatzwerten angegeben wird.

9. Anwendergerät nach Anspruch 7 oder 8, wobei die DCI zum Aktivieren des SP-CSI-Berichts konfiguriert sind, zu einem vorgegebenen Zeitpunkt empfangen zu werden.

10. Anwendergerät nach Anspruch 9, wobei die SP-CSI, die zunächst berichtet werden sollen, nachdem die DCI zum Aktivieren des SP-CSI-Berichts empfangen worden sind, Informationen enthalten, die einen Typ höchster Priorität besitzen.

11. Anwendergerät nach Anspruch 10, wobei ein Übertragungsversatz für Informationen, die einen Typ verbleibender Priorität besitzen, in den hergeleiteten SP-CSI aus dem Übertragungsversatz für die Informationen, die den Typ höchster Priorität besitzen, relativ bestimmt wird.

12. Anwendergerät nach einem der Ansprüche 7 bis 11, wobei der SP-CSI-Bericht durch weitere DCI deaktiviert wird.

13. Verfahren zum Empfangen eines Kanalzustandsberichts in einem Drahtloskommunikationssystem, wobei das Verfahren durch eine Basisstation durchgeführt wird und Folgendes umfasst:

Senden von Abwärtsstreckensteuerinformationen, DCI, zum Aktivieren eines Berichts halbbeständiger Kanalzustandsinformationen, SP-CSI-Bericht; und
Empfangen von SP-CSI auf der Grundlage eines CSI-Bezugssignals, CSI-RS, in Reaktion auf die gesendeten DCI, wobei
ein Zeitpunkt des ersten Empfangens der SP-CSI auf der Grundlage eines Zeitversatzes (k) und eines Zeitpunkts (n), zu dem die DCI gesendet werden, bestimmt wird, wobei der Zeitversatz (k) durch die DCI angegeben wird, und
die SP-CSI mit einem konfigurierten Zeitraum ab dem Zeitpunkt des ersten Berichtens der SP-CSI periodisch empfangen werden.

## Revendications

1. Procédé d'exécution d'un rapport d'état de canal dans un système de communication sans fil, le procédé étant exécuté par un équipement utilisateur (10) et comprenant les étapes suivantes :

recevoir des informations de commande de liaison descendante, DCI, pour activer un rapport d'informations d'état de canal semi-persistant, SP CSI ; et
dériver et rapporter les SP CSI sur la base d'un signal de référence CSI, CSI-RS, en réponse aux DCI reçues, où une instance temporelle de premier rapport des SP CSI est déterminée sur la base d'un décalage temporel (k) et d'une instance temporelle (n) dans laquelle les DCI sont reçues, le décalage temporel (k) étant indiqué par les DCI, et
où les SP CSI sont rapportées périodiquement avec une période configurée à partir de l'instance temporelle du premier rapport des SP CSI.

**2.** Procédé selon la revendication 1, dans lequel le décalage temporel (k) est indiqué par les DCI parmi une pluralité de valeurs de décalages temporels prédéfinies.

**3.** Procédé selon la revendication 1 ou la revendication 2, dans lequel les DCI pour activer le rapport des SP CSI sont configurées pour être reçues à une instance temporelle prédéterminée.

**4.** Procédé selon la revendication 3, dans lequel les SP CSI devant être rapportées en premier après la réception des DCI pour activer le rapport de SP CSI comprend les informations ayant le type de priorité le plus élevé.

**5.** Procédé selon la revendication 4, dans lequel un décalage de transmission pour des informations ayant un type de priorité restant dans les SP CSI dérivées est déterminé par rapport au décalage de transmission pour les informations ayant le type de priorité le plus élevé.

**6.** Procédé selon l'une quelconque des revendications 1 à 5, dans lequel le rapport de SP CSI est désactivé par d'autres DCI.

**7.** Equipement utilisateur (10) configuré pour exécuter un rapport d'état de canal dans un système de communication sans fil, l'équipement utilisateur (10) comprenant :

un émetteur et un récepteur (13) ; et
un processeur (11) configuré pour commander l'émetteur et le récepteur (13),
où le processeur (11) est configuré pour :

recevoir des informations de commande de liaison descendante, DCI, pour activer un rapport d'informations d'état de canal semi-persistant, SP CSI, et
dériver et rapporter les SP CSI sur la base d'un signal de référence CSI, CSI-RS, en réponse aux DCI reçues, où une instance temporelle de premier rapport des SP CSI est déterminée sur la base d'un décalage temporel (k) et d'une instance temporelle (n) dans laquelle les DCI sont reçues, le décalage temporel (k) étant indiqué par les DCI, et
où les SP CSI sont rapportées périodiquement avec une période configurée à partir de l'instance temporelle du premier rapport des SP CSI.

**8.** Equipement utilisateur selon la revendication 7, dans lequel le décalage temporel (k) est indiqué par les DCI parmi une pluralité de valeurs de décalages temporels prédéfinies.

**9.** Equipement utilisateur selon la revendication 7 ou la revendication 8, dans lequel les DCI pour activer le rapport des SP CSI sont configurées pour être reçues à une instance temporelle prédéterminée.

**10.** Equipement utilisateur selon la revendication 9, dans lequel les SP CSI devant être rapportées en premier après la réception des DCI pour activer le rapport de SP CSI comprend les informations ayant le type de priorité le plus élevé.

**11.** Equipement utilisateur selon la revendication 10, dans lequel un décalage de transmission pour des informations ayant un type de priorité restant dans les SP CSI dérivées est déterminé par rapport au décalage de transmission pour les informations ayant le type de priorité le plus élevé.

**12.** Equipement utilisateur selon l'une quelconque des revendications 7 à 11, dans lequel le rapport de SP CSI est désactivé par d'autres DCI.

**13.** Procédé de réception d'un rapport d'état de canal dans un système de communication sans fil, le procédé étant exécuté par une station de base et comprenant les étapes suivantes :

transmettre des informations de commande de liaison descendante, DCI, pour activer un rapport d'informations d'état de canal semi-persistant, SP CSI ; et
recevoir les SP CSI sur la base d'un signal de référence CSI, CSI-RS, en réponse aux DCI transmises,
où une instance temporelle de la première réception des SP CSI est déterminée sur la base d'un décalage temporel (k) et d'une instance temporelle (n) dans laquelle les DCI sont transmis, le décalage temporel (k) étant indiqué par les DCI, et
où les SP CSI sont reçues périodiquement avec une période configurée à partir de l'instance temporelle de la première réception des SP CSI.

FIG. 1

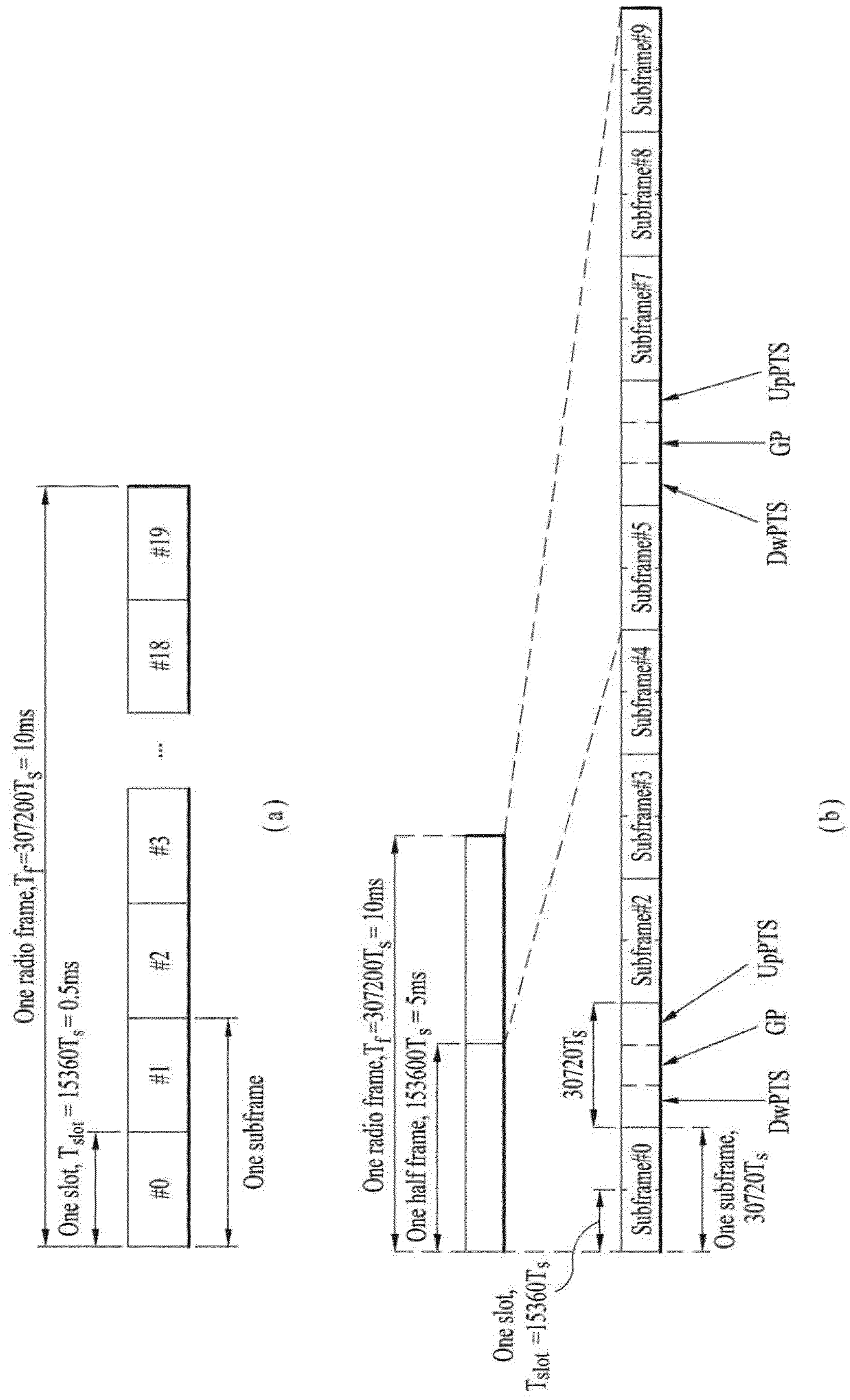
One radio frame, $T_f$=307200$T_s$= 10ms
One slot, $T_{slot}$ = 15360$T_s$ = 0.5ms
#0
#1
#2
#3
...
#18
#19
One subframe
(a)
One radio frame, $T_f$=307200$T_s$ = 10ms
One half frame, 153600$T_s$ = 5ms
30720$T_s$
One slot, $T_{slot}$ =15360$T_s$
Subframe#0
Subframe#2
Subframe#3
Subframe#4
Subframe#5
Subframe#7
Subframe#8
Subframe#9
One subframe, 30720$T_s$
DwPTS
GP
UpPTS
DwPTS
GP
UpPTS
(b)

FIG. 2

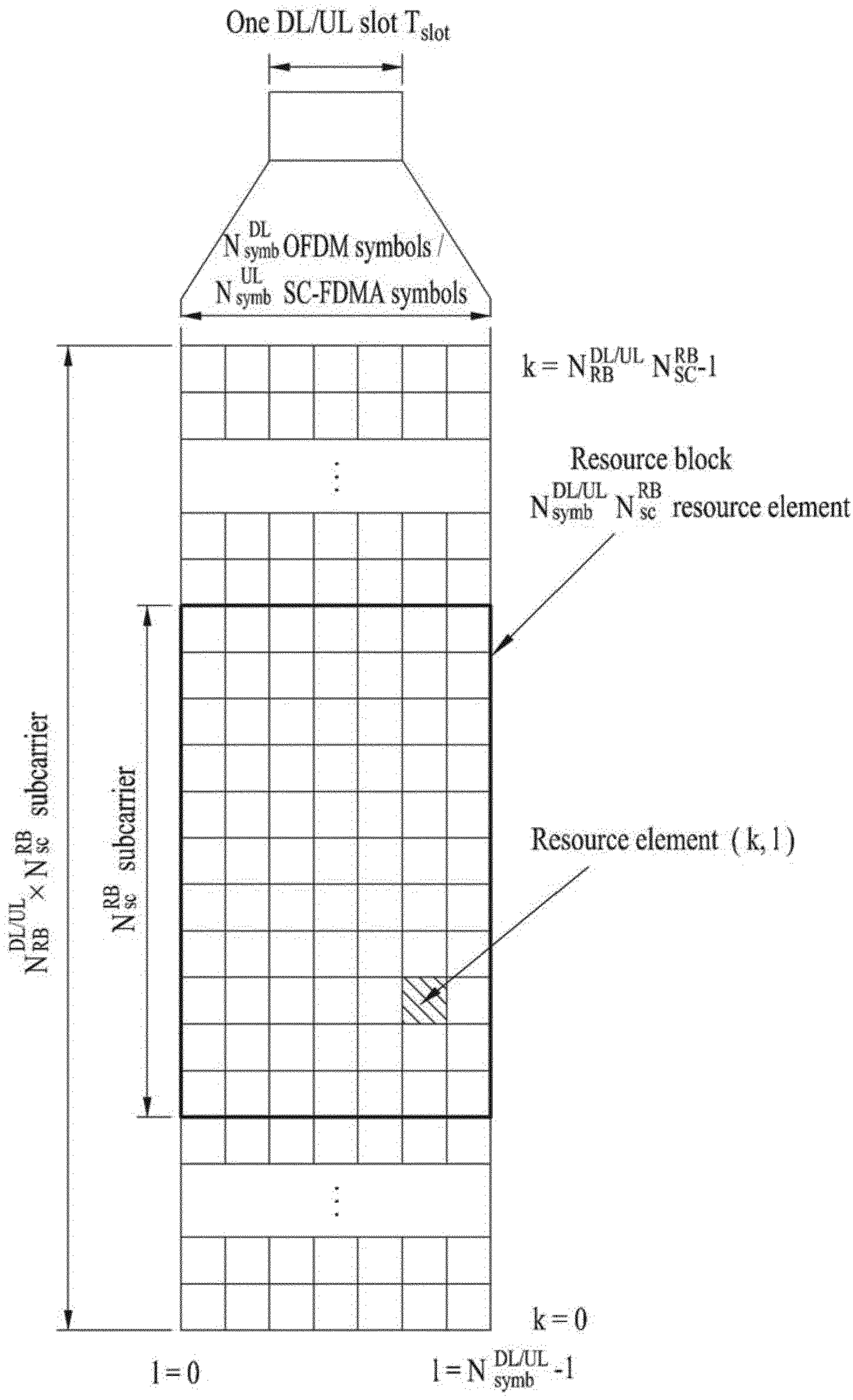
One DL/UL slot $T_{slot}$
$N^{DL}_{symb}$ OFDM symbols /
$N^{UL}_{symb}$ SC-FDMA symbols
$k = N^{DL/UL}_{RB} N^{RB}_{SC}-1$
Resource block
$N^{DL/UL}_{symb} N^{RB}_{sc}$ resource element
$N^{DL/UL}_{RB} \times N^{RB}_{sc}$ subcarrier
$N^{RB}_{sc}$ subcarrier
Resource element (k, l)
k = 0
l = 0
$l = N^{DL/UL}_{symb} -1$

FIG. 3

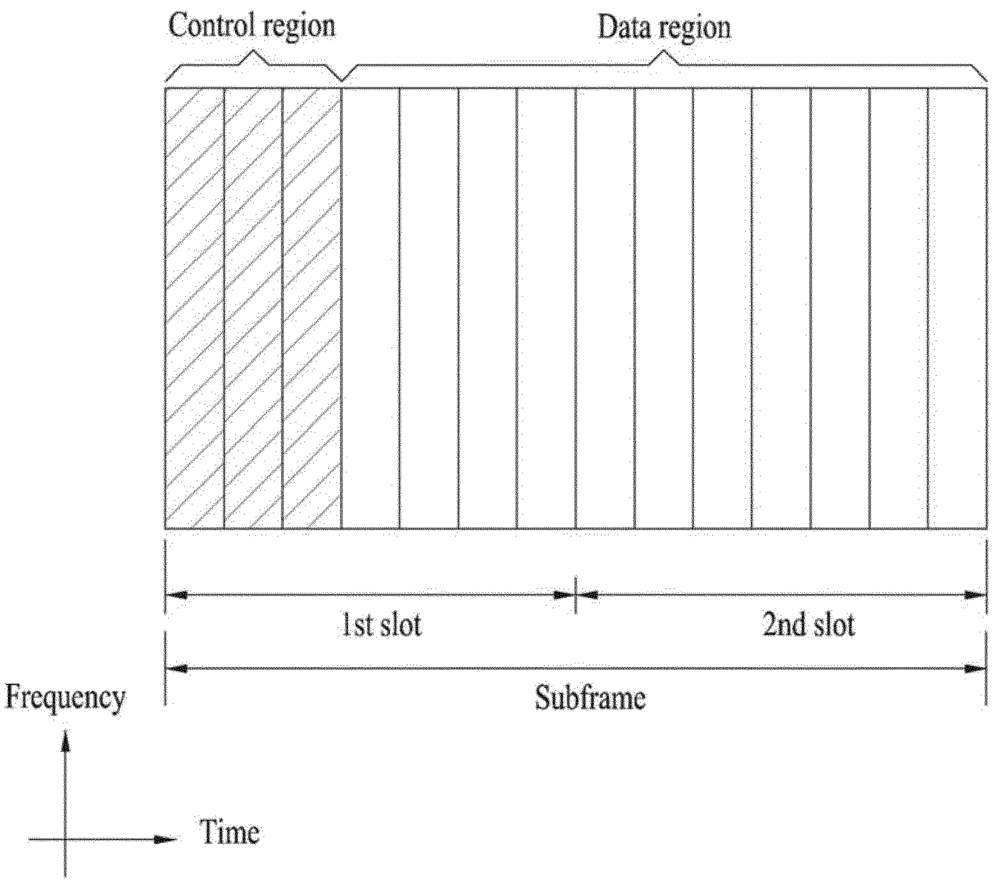
Control region
Data region
1st slot
2nd slot
Subframe
Frequency
Time

FIG. 4

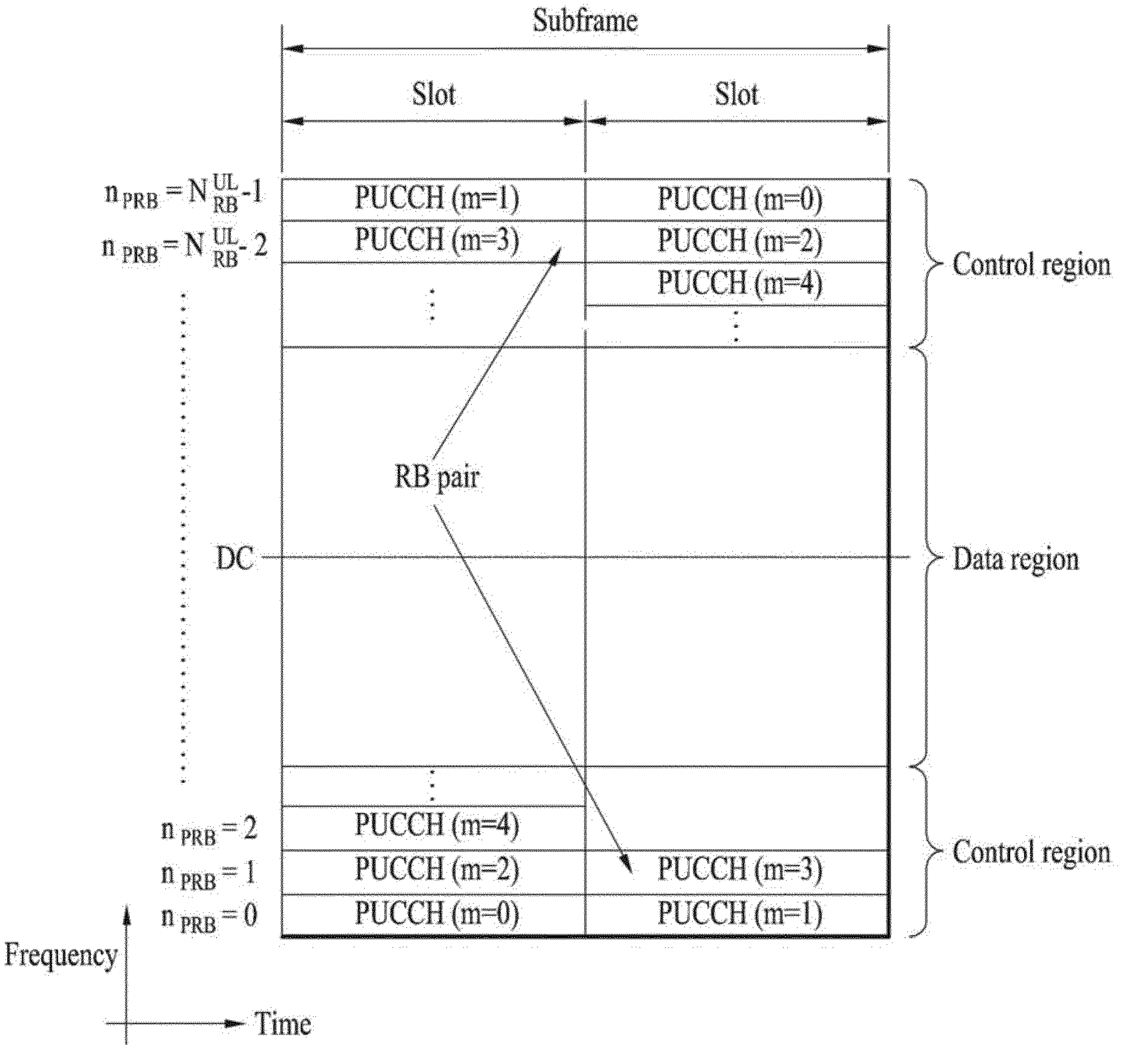
Subframe
Slot
Slot
$n_{PRB} = N^{UL}_{RB}-1$
$n_{PRB} = N^{UL}_{RB}-2$
PUCCH (m=1)
PUCCH (m=0)
PUCCH (m=3)
PUCCH (m=2)
PUCCH (m=4)
Control region
RB pair
DC
Data region
PUCCH (m=4)
$n_{PRB} = 2$
$n_{PRB} = 1$
$n_{PRB} = 0$
PUCCH (m=2)
PUCCH (m=3)
PUCCH (m=0)
PUCCH (m=1)
Control region
Frequency
Time

FIG. 5

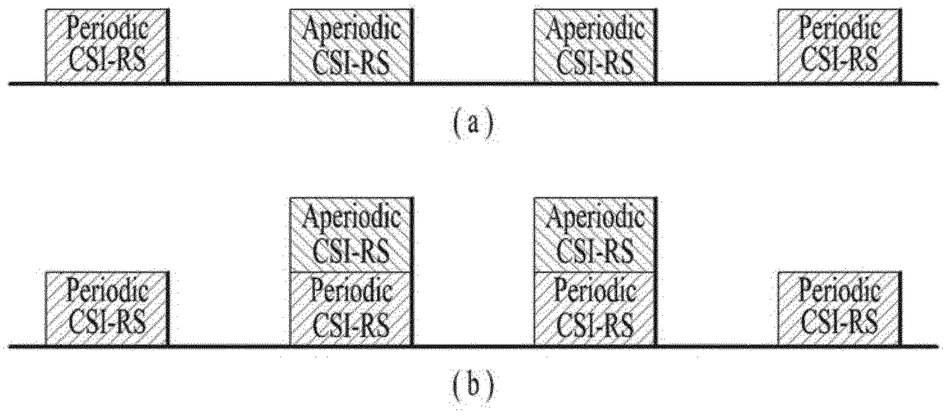
Periodic CSI-RS
Aperiodic CSI-RS
Aperiodic CSI-RS
Periodic CSI-RS
(a)
Aperiodic CSI-RS
Aperiodic CSI-RS
Periodic CSI-RS
Periodic CSI-RS
Periodic CSI-RS
Periodic CSI-RS
(b)

FIG. 6

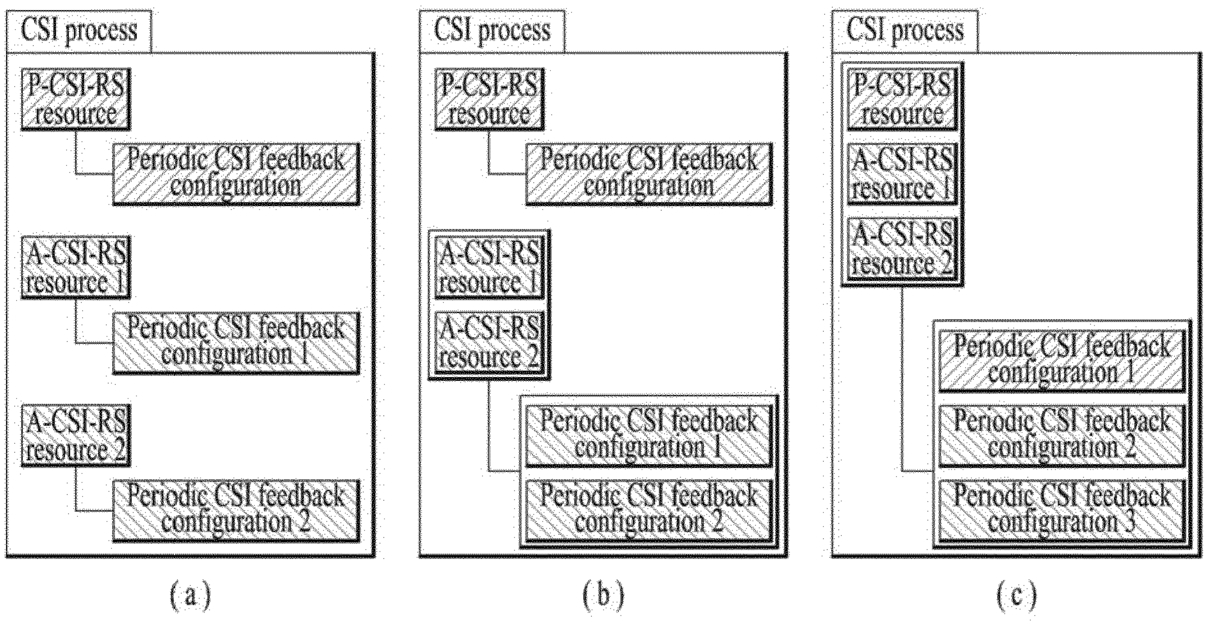
CSI process
P-CSI-RS resource
Periodic CSI feedback configuration
A-CSI-RS resource 1
Periodic CSI feedback configuration 1
A-CSI-RS resource 2
Periodic CSI feedback configuration 2
(a)
CSI process
P-CSI-RS resource
Periodic CSI feedback configuration
A-CSI-RS resource 1
A-CSI-RS resource 2
Periodic CSI feedback configuration 1
Periodic CSI feedback configuration 2
(b)
CSI process
P-CSI-RS resource
A-CSI-RS resource 1
A-CSI-RS resource 2
Periodic CSI feedback configuration 1
Periodic CSI feedback configuration 2
Periodic CSI feedback configuration 3
(c)

FIG. 7

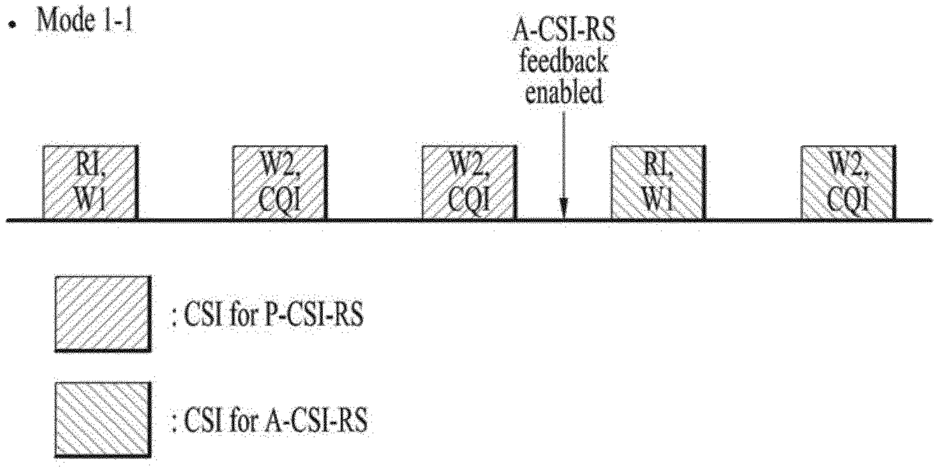
• Mode 1-1
A-CSI-RS feedback enabled
RI, W1
W2, CQI
W2, CQI
RI, W1
W2, CQI
: CSI for P-CSI-RS
: CSI for A-CSI-RS

FIG. 8

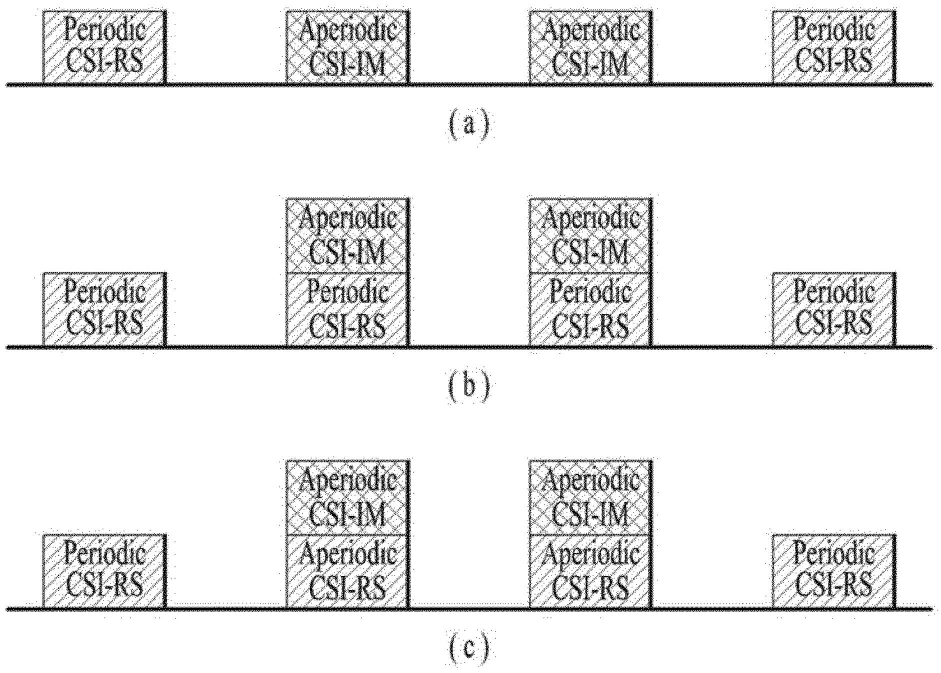
Periodic CSI-RS
Aperiodic CSI-IM
Aperiodic CSI-IM
Periodic CSI-RS
(a)
Aperiodic CSI-IM
Aperiodic CSI-IM
Periodic CSI-RS
Periodic CSI-RS
Periodic CSI-RS
Periodic CSI-RS
(b)
Aperiodic CSI-IM
Aperiodic CSI-IM
Periodic CSI-RS
Aperiodic CSI-RS
Aperiodic CSI-RS
Periodic CSI-RS
(c)

FIG. 9

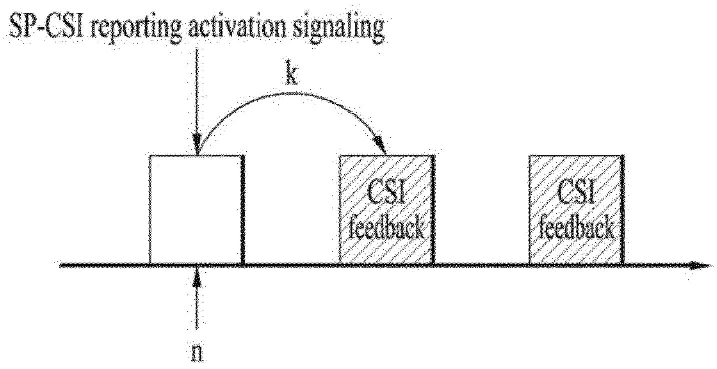
SP-CSI reporting activation signaling
k
CSI feedback
CSI feedback
n

FIG. 10

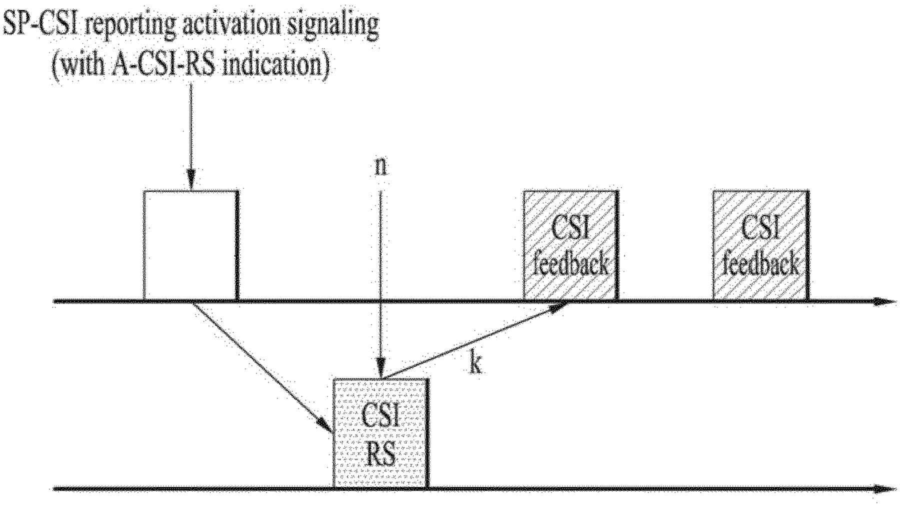
SP-CSI reporting activation signaling
(with A-CSI-RS indication)
n
CSI feedback
CSI feedback
k
CSI RS

FIG. 11

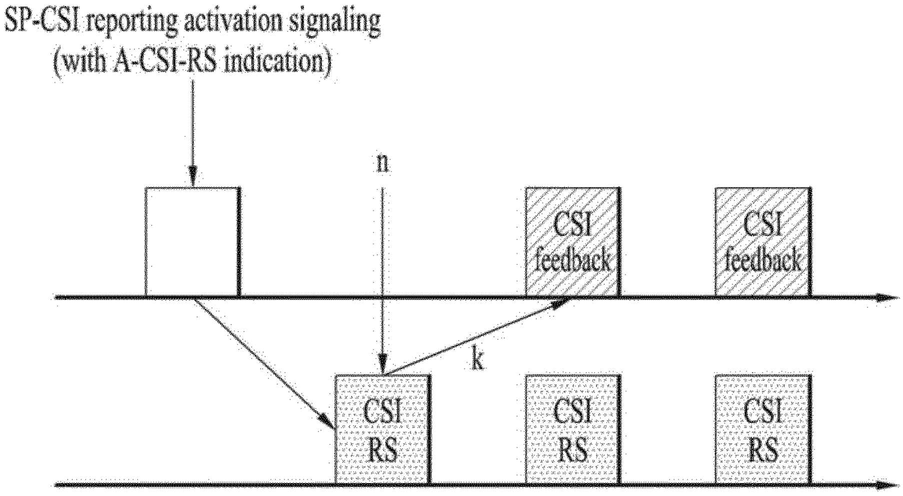
SP-CSI reporting activation signaling
(with A-CSI-RS indication)
n
CSI feedback
CSI feedback
k
CSI RS
CSI RS
CSI RS

FIG. 12

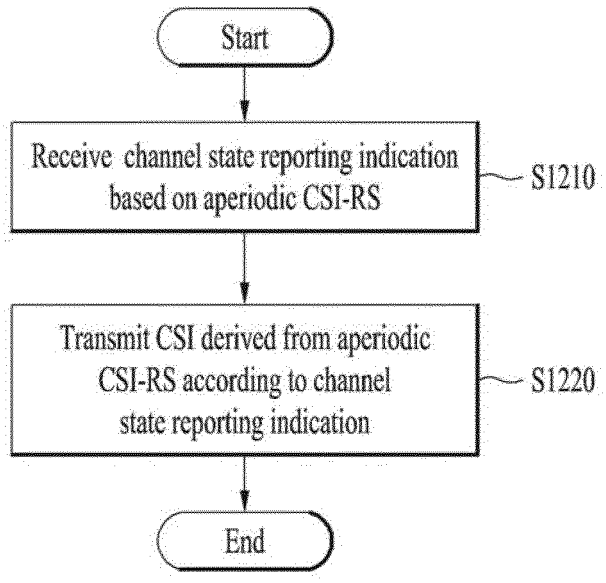
Start
Receive channel state reporting indication based on aperiodic CSI-RS
S1210
Transmit CSI derived from aperiodic CSI-RS according to channel state reporting indication
S1220
End

FIG. 13

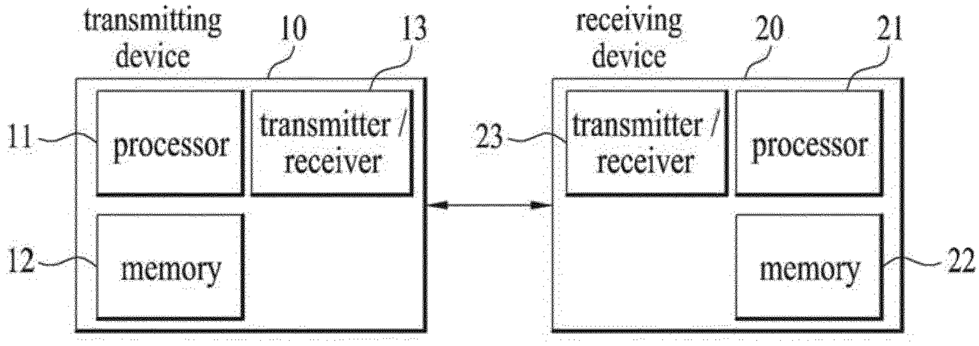
transmitting device
10
13
11
processor
transmitter / receiver
12
memory
receiving device
20
21
23
transmitter / receiver
processor
memory
22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **NOKIA et al.** On the CSI timing relationships. *3GPP Draft, R1-1610267,* 30 September 2016, vol. RAN WG1